# EUROPEAN PATENT APPLICATION

(11) **EP 4 221 339 A1**
(43) Date of publication of application: **02.08.2023**
(21) Application number: 21884929.7
(22) Date of filing: 12.10.2021
(51) Int. Cl.: H04W 36/08

(54) **CELL HANDOVER METHOD AND DEVICE**

(30) Priority: 31.10.2020 CN 202011198660
(71) Applicant: Huawei Technologies Co., Ltd., Shenzhen, Guangdong 518129 (CN)
(72) Inventor: WANG, Jun, Shenzhen, Guangdong 518129 (CN); LYU, Yongxia, Shenzhen, Guangdong 518129 (CN); WANG, Ting, Shenzhen, Guangdong 518129 (CN); MA, Jianglei, Shenzhen, Guangdong 518129 (CN)
(74) Representative: Maiwald GmbH
(86) International application number: PCT/CN2021/123323
(87) International publication number: WO 2022/089200

(57) **Abstract**

This application relates to a cell handover method and apparatus. The method includes: A terminal receives at least one piece of configuration information from a serving cell, where the at least one piece of configuration information is provided by at least one target cell; the terminal selects a first target cell to which the terminal is to be handed over, where the first target cell is one of the at least one target cell; the terminal is handed over to the first target cell based on the selection; and the terminal performs communication based on configuration information corresponding to the first target cell. By using the method and the apparatus, energy saving of the terminal can be implemented.

## Description

### TECHNICAL FIELD

This application relates to the field of communication technologies, and in particular, to a cell handover method and apparatus, a communication system, a chip system, a computer-readable storage medium, and a computer program.

### BACKGROUND

The fifth generation (5G for short) radio access technology is referred to as new radio in English, NR for short.

In an NR system, a terminal (User Equipment: UE) has three states: an idle (Idle) state, an inactive (Inactive) state, and a connected (Connected) state.

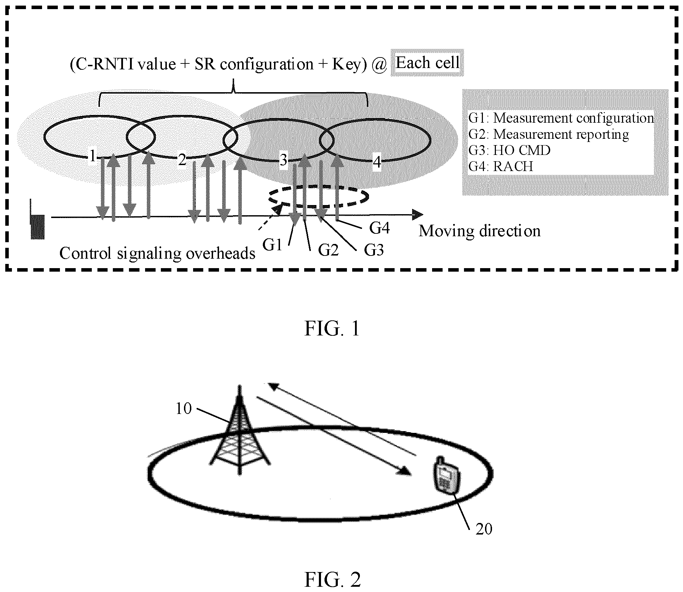

When UE in a connected state moves from one cell to another cell, a cell handover is implemented. FIG. 1 is a schematic diagram of a cell handover of UE in a connected state in the conventional technology. As shown in FIG. 1, a cell handover occurs when UE in a connected state moves from a cell 1 to a cell 2, from a cell 2 to a cell 3, and from a cell 3 to a cell 4. Each cell handover includes four steps: measurement configuration delivery G1, measurement reporting G2, handover command (Handover Command: HO CMD) or conditional handover command (Conditional Handover Command: CHO CMD) delivery G3, and random access G4. In the measurement configuration delivery G1 step, a serving cell of the UE delivers measurement configuration to the UE in advance. In the measurement reporting G2 step, after a measurement event specified in the delivered measurement configuration is met, the UE reports a measurement report to the serving cell. In the handover command or conditional handover command delivery G3 step, the serving cell selects, with reference to the measurement report that is reported by the UE (optionally, the measurement report may not be referred to), a target cell to which the UE is to be handed over, notifies the target cell to prepare handover-related resources (for example, a frequency and a physical-layer cell identity (Physical-layer Cell Identity: PCI) of the target cell, a dedicated preamble (Preamble), a data radio bearer (Data Radio Bearer: DRB) configuration, a grant free (Grant Free: GF) configuration, and the like), and then delivers the handover-related resources of the target cell to the UE through a handover command. In the random access G4 step, after receiving a handover command or a conditional handover command from the serving cell, the UE initiates access to the target cell (for example, access to the target cell through a dedicated preamble or a common preamble) and sends a handover complete (HO complete) message to the target cell. So far, from the perspective of an air interface, a complete handover procedure of the UE in the connected state is completed.

It can be learned from the foregoing description that, in the conventional technology, a cell handover of UE in a connected state is controlled by a network. When implementing this application, the inventor finds that a large amount of handover-related control signaling (for example, delivery of measurement configurations, reporting of measurement reports, and delivery of handover commands) is used for the cell handover controlled by the network, but sending and receiving the control signaling by the UE consumes power of the UE. In particular, if high-speed moving UE is always in a connected state, the UE frequently performs cell handovers, and the UE may consume power quickly.

### SUMMARY

In view of the foregoing unsoundness of the conventional technology, embodiments of this application provide a cell handover method and apparatus, and energy saving of a terminal can be implemented by using the method and apparatus.

According to a first aspect, a cell handover method is provided. The method includes: A terminal receives at least one piece of configuration information from a serving cell, where the at least one piece of configuration information is provided by at least one target cell; the terminal selects a first target cell to which the terminal is to be handed over, where the first target cell is one of the at least one target cell; the terminal is handed over to the first target cell based on the selection; and the terminal performs communication based on the configuration information corresponding to the first target cell. The terminal selects the target cell to which the terminal is to be handed over and is handed over to the selected target cell based on the selection, that is, the terminal independently selects the cell to which the terminal is to be handed over and is handed over to the selected cell without network control. In this process, the terminal does not need to upload a measurement report and the cell does not need to deliver a handover command, so that handover-related signaling overheads can be reduced, power consumption of the terminal can be correspondingly reduced, and energy saving of the terminal can be implemented.

According to the first aspect, in a first possible implementation of the method, that the terminal selects a first target cell to which the terminal is to be handed over includes: The terminal receives a cell reselection parameter delivered by the serving cell; and the terminal performs a cell reselection process based on the received cell reselection parameter to select the first target cell as a cell to which the terminal is to be handed over. The terminal selects the cell to which the terminal is to be handed over through the cell reselection process, and can quickly select the cell to which the terminal is to be handed over.

According to the first aspect, in a second possible implementation of the method, that the terminal selects a first target cell to which the terminal is to be handed over includes: The terminal measures signal quality of at least one neighboring cell of the serving cell; the terminal determines signal quality of at least a first neighboring cell, so that a specified measurement event is satisfied and the first neighboring cell is one of the at least one target cell; and the terminal selects the first neighboring cell as the first target cell. The terminal selects the cell to which the terminal is to be handed over based on the measurement event, and can accurately select a cell to which the terminal can be handed over.

According to any one of the first aspect or the foregoing possible implementations of the first aspect, in a third possible implementation of the method, that the terminal performs communication based on configuration information corresponding to the first target cell includes: The terminal sends uplink data or signaling. The terminal notifies, by sending uplink data or signaling, that the terminal is handed over to the selected target cell, so that the selected target cell can quickly learn which cell the terminal is currently located in, and perform downlink control information sending and data scheduling on the terminal in time. Therefore, fast scheduling and transmission of downlink data can still be implemented while handover signaling overheads of the terminal are reduced.

According to any one of the first aspect or the foregoing possible implementations of the first aspect, in a fourth possible implementation of the method, the configuration information includes uplink synchronization information associated with the at least one target cell. The configuration information includes the uplink synchronization information associated with the cell, and the terminal may perform uplink data and/or signaling transmission without using a contention-based random access process, to reduce an upload delay of data and/or signaling.

According to any one of the first aspect or the foregoing possible implementations of the first aspect, in a fifth possible implementation of the method, the configuration information includes: a reserved resource and effective time information corresponding to the resource. The effective time information of the resource reserved for the terminal is included in the configuration information. After an effective time of the resource expires, if the resource is still not used by the terminal, the resource may be released and provided for another terminal to use, to improve resource utilization.

According to any one of the first aspect or the foregoing possible implementations of the first aspect, in a sixth possible implementation of the method, the uplink synchronization information includes a timing advance. The uplink synchronization information includes the usage timing advance, so that data and/or signaling uploaded by the terminal can be advantageously prevented from interfering with signal reception of the cell.

According to any one of the first aspect or the foregoing possible implementations of the first aspect, in a seventh possible implementation of the method, the uplink synchronization information includes a mapping relationship between different values of a measurement parameter and a timing advance, and that the terminal sends uplink data or signaling includes: The terminal obtains an actual value of the measurement parameter; the terminal determines a timing advance of the first target cell based on the actual value of the measurement parameter and the mapping relationship associated with the first target cell; and the terminal sends the uplink data or signaling based on the determined timing advance. The uplink synchronization information includes the mapping relationship between different values of the measurement parameter and the timing advance, so that the terminal can send uplink data and/or signaling by using a timing advance that matches an actual situation of the terminal. Therefore, interference caused by data and/or signaling uploaded by the terminal to signal reception of the cell can be avoided more advantageously.

According to any one of the first aspect or the foregoing possible implementations of the first aspect, in an eighth possible implementation of the method, the measurement parameter includes at least one of the following: time information, signal quality of downlink signals of the first target cell and/or one or more neighboring cells of the first target cell, a geographical location of the terminal, and a distance between the terminal and the first target cell. By using the foregoing measurement parameter, a timing advance that matches an actual situation of the UE may be easily determined.

According to any one of the first aspect or the foregoing possible implementations of the first aspect, in a ninth possible implementation of the method, the method further includes: When or after sending the uplink data or signaling, the terminal sends at least one of the following to the first target cell: an identifier of the serving cell and an identifier of the terminal in the serving cell; information about the at least one target cell; and a message for requesting configuration information of more target cells of the terminal. By sending the identifier of the serving cell and the identifier of the terminal in the serving cell to the first target cell, the first target cell can obtain data related to the terminal from the serving cell (for example, downlink data that is received by the serving cell but is not successfully sent to the terminal, uplink data that is successfully received by the serving cell from the terminal but is not successfully forwarded to a core network element, and/or context information of the terminal), to send the downlink data that is of the terminal and that is stacked in the serving cell to the terminal, and ensure that no packet loss occurs. By sending the information about the at least one target cell to the first target cell, the first target cell can determine whether the terminal needs configuration information of more target cells, and deliver the configuration information of the more target cells to the terminal in advance when necessary, to prevent the terminal from frequently requesting configuration information of target cells in a moving process. By sending, to the first target cell, a message for requesting configuration information of more target cells of the terminal, the first target cell can deliver the configuration information of the more target cells to the terminal in advance before the terminal is handed over to another cell.

According to any one of the first aspect or the foregoing possible implementations of the first aspect, in a tenth possible implementation of the method, when the at least one target cell is a plurality of target cells, the at least one target cell includes at least two target cells for serial handover. When the at least one target cell includes at least two target cells for serial handover, the terminal already has configuration information of target cells for subsequent continuous serial handover in advance. In addition, the terminal does not discard previously received configuration information of target cells for serial handover each time after completing access to a new target cell, and discards the configuration information until an effective time corresponding to the configuration information expires, to avoid that the terminal frequently requests configuration information of target cells.

According to any one of the first aspect or the foregoing possible implementations of the first aspect, in an eleventh possible implementation of the method, the method further includes: Before or after the terminal is handed over to the first target cell, the terminal sends notification information to the serving cell, where the notification information indicates that the terminal is already handed over to another cell. For example, but not limited to, in a hard handover case, before the UE communicates with the first target cell by using the resource allocated by the first target cell(for example, but not limited to, after receiving a handover command (Handover Command: HO CMD) or a conditional handover command (Conditional Handover Command: CHO CMD) and before leaving the serving cell), the UE sends notification information to the serving cell to indicate that the UE is already handed over to another cell. For example, but not limited to, in a soft handover case, before or after the UE is handed over to the first target cell, when the UE receives, from the first target cell, a message indicating disconnection from the original serving cell, the UE sends notification information to the serving cell to indicate that the UE is already handed over to another cell. Before or after the terminal is handed over to another cell, the terminal sends the notification information to the original serving cell to indicate that the terminal is handed over to another cell. The original serving cell can be disconnected from the original serving cell in time to stop downlink scheduling for the terminal and release a resource allocated to the terminal for use by another terminal, to improve resource utilization.

According to a second aspect, a cell handover method is provided. The method includes: determining a target cell; sending a request message to the target cell, where the request message requests the target cell to reserve a resource for a terminal; receiving configuration information from the target cell, where the configuration information includes the reserved resource, and effective time information corresponding to the reserved resource and/or uplink synchronization information associated with the target cell; and sending the configuration information to the terminal. Resources reserved for the terminal by potential target cells are delivered to the terminal in advance. Therefore, after camping on and being handed over to these potential target cells, the terminal may directly use the resources delivered in advance to perform uplink data or signaling transmission, to accelerate the uplink data or signaling transmission. In addition, uplink synchronization information associated with potential target cells is delivered to the terminal in advance In this case, when a cell to which the terminal is handed over is the potential target cell, the terminal can perform uplink data and/or signaling transmission without using a contention-based random access process, to reduce an upload delay of data and/or signaling. In addition, effective time information corresponding to the resource reserved for the terminal is delivered to the terminal in advance. Therefore, after an effective time of the resource expires, if the resource is still not used by the terminal, the resource may be released and provided for another terminal to use, to improve resource utilization.

According to the second aspect, in a first possible implementation of the method, the request message includes effective time information of a recommended resource, and/or recommended uplink synchronization information, and/or auxiliary information used to determine uplink synchronization information. The request message sent to the target cell includes the effective time information of the recommended resource, and/or the recommended uplink synchronization information, and/or the auxiliary information used to determine uplink synchronization information. This can help the target cell effectively determine the effective time information corresponding to the resource reserved for the terminal and the uplink synchronization information associated with the target cell.

According to the second aspect or the first possible implementation of the second aspect, in a second possible implementation of the method, the uplink synchronization information includes a timing advance or a mapping relationship between different values of a measurement parameter and a timing advance. The uplink synchronization information includes the usage timing advance, so that data and/or signaling uploaded by the UE can be advantageously prevented from interfering with signal reception of the cell. The uplink synchronization information includes the mapping relationship between different values of the measurement parameter and the timing advance, so that the terminal can send uplink data and/or signaling by using a timing advance that matches an actual situation of the terminal. Therefore, interference caused by data and/or signaling uploaded by the terminal to signal reception of the cell can be avoided more advantageously.

According to any one of the second aspect or the foregoing possible implementations of the second aspect, in a third possible implementation of the method, the measurement parameter includes time information, signal quality of a downlink signal of a cell, a geographical location of the terminal, or a distance between the terminal and the cell. By using the foregoing measurement parameter, a timing advance that matches an actual situation of the terminal may be easily determined.

According to a third aspect, a cell handover method is provided. The method includes: receiving a request message from a serving cell, where the request message requests a target cell to reserve a resource for a terminal; and sending configuration information to the serving cell, where the configuration information includes the reserved resource, and effective time information corresponding to the reserved resource and/or uplink synchronization information associated with the target cell. The resource reserved by the target cell for the terminal is delivered by the serving cell to the terminal. Therefore, after camping and being handed over to the target cell, the terminal may directly use the resource to perform uplink data or signaling transmission, to accelerate uplink data or signaling transmission. In addition, the uplink synchronization information associated with the target cell is delivered by the serving cell to the terminal. In this case, when a cell to which the terminal is handed over is the target cell, the terminal may perform uplink data and/or signaling transmission without using a contention-based random access process, to reduce an upload delay of data and/or signaling. In addition, the effective time information corresponding to the resource reserved for the terminal is delivered by the serving cell to the terminal. Therefore, after an effective time of the resource expires, if the resource is still not used by the terminal, the resource may be released and provided for another terminal to use, to improve resource utilization.

According to the third aspect, in a first possible implementation of the method, the request message includes effective time information of a recommended resource, and/or recommended uplink synchronization information, and/or auxiliary information used to determine uplink synchronization information; and the effective time information corresponding to the reserved resource and/or the uplink synchronization information associated with the target cell are/is set based on the effective time information of the recommended resource and/or the recommended uplink synchronization information and/or the auxiliary information used to determine the uplink synchronization information. By using the effective time information of the resource recommended by the serving cell and/or the recommended uplink synchronization information and/or the auxiliary information used to determine the uplink synchronization information, the target cell can effectively determine the effective time information corresponding to the resource reserved for the terminal and the uplink synchronization information associated with the target cell.

According to the third aspect or the first possible implementation of the third aspect, in a second possible implementation of the method, the method further includes: receiving uplink information of the terminal; and; registering the terminal as a terminal handed over to the target cell. When the uplink information of the terminal is received for the first time, the terminal is registered as a terminal handed over to the target cell, so that the target cell can learn that the terminal is currently handed over to the terminal, to perform downlink control information sending and data scheduling on the terminal in time.

According to a fourth aspect, a cell handover apparatus is provided. The apparatus includes a receiving unit, a selection unit, a handover unit, and a communication unit. The receiving unit is configured to receive at least one piece of configuration information from a serving cell, where the at least one piece of configuration information is provided by at least one target cell. The selection unit is configured to select a first target cell to be handed over to, where the first target cell is one of the at least one target cell. The handover unit is configured to hand over to the first target cell based on the selection. The communication unit is configured to perform communication based on configuration information corresponding to the first target cell. The terminal selects the target cell to which the terminal is to be handed over and is handed over to the selected target cell based on the selection, that is, the terminal independently selects the cell to which the terminal is to be handed over and is handed over to the selected cell without network control. In this process, the terminal does not need to upload a measurement report and the cell does not need to deliver a handover command, so that handover-related signaling overheads can be reduced, power consumption of the terminal can be correspondingly reduced, and energy saving of the terminal can be implemented.

According to the fourth aspect, in a first possible implementation of the apparatus, the receiving unit is further configured to receive a cell reselection parameter delivered by the serving cell; and the selection unit is further configured to perform a cell reselection process based on the received cell reselection parameter to select the first target cell as a cell to be handed over to. The terminal selects the cell to which the terminal is to be handed over through the cell reselection process, and can quickly select the cell to which the terminal is to be handed over.

According to the fourth aspect, in a second possible implementation of the apparatus, the apparatus further includes a measurement unit, configured to measure signal quality of at least one neighboring cell of the serving cell. The selection unit is further configured to determine signal quality of at least a first neighboring cell, so that a specified measurement event is satisfied and the first neighboring cell is one of the at least one target cell, and select the first neighboring cell as the first target cell. The terminal selects the cell to which the terminal is to be handed over based on the measurement event, and can accurately select a cell to which the terminal can be handed over.

According to any one of the fourth aspect or the foregoing possible implementations of the fourth aspect, in a third possible implementation of the apparatus, the communication unit is further configured to send uplink data or signaling. The terminal notifies, by sending uplink data or signaling, that the terminal is handed over to the selected target cell, so that the selected target cell can quickly learn which cell the terminal is currently located in, and perform downlink control information sending and data scheduling on the terminal in time. Therefore, fast scheduling and transmission of downlink data can still be implemented while handover signaling overheads of the terminal are reduced.

According to any one of the fourth aspect or the foregoing possible implementations of the fourth aspect, in a fourth possible implementation of the apparatus, the configuration information includes uplink synchronization information associated with the at least one target cell. The configuration information includes the uplink synchronization information associated with the cell, and the terminal may perform uplink data and/or signaling transmission without using a contention-based random access process, to reduce an upload delay of data and/or signaling.

According to any one of the fourth aspect or the foregoing possible implementations of the fourth aspect, in a fifth possible implementation of the apparatus, the configuration information includes: a reserved resource and effective time information corresponding to the resource. The effective time information of the resource reserved for the terminal is included in the configuration information. After an effective time of the resource expires, if the resource is still not used by the terminal, the resource may be released and provided for another terminal to use, to improve resource utilization.

According to any one of the fourth aspect or the foregoing possible implementations of the fourth aspect, in a sixth possible implementation of the apparatus, the uplink synchronization information includes a timing advance. The uplink synchronization information includes the usage timing advance, so that data and/or signaling uploaded by the terminal can be advantageously prevented from interfering with signal reception of the cell.

According to any one of the fourth aspect or the foregoing possible implementations of the fourth aspect, in a seventh possible implementation of the apparatus, the uplink synchronization information includes a mapping relationship between different values of a measurement parameter and a timing advance. The apparatus further includes: an obtaining unit, configured to obtain an actual value of the measurement parameter; and a determining unit, configured to determine a timing advance of the first target cell based on the actual value of the measurement parameter and the mapping relationship associated with the first target cell. The communication unit is further configured to send the uplink data or signaling based on the determined timing advance. The uplink synchronization information includes the mapping relationship between different values of the measurement parameter and the timing advance, so that the terminal can send the uplink data and/or signaling by using a timing advance that matches an actual situation of the terminal. Therefore, interference caused by data and/or signaling uploaded by the terminal to signal reception of the cell can be avoided more advantageously.

According to any one of the fourth aspect or the foregoing possible implementations of the fourth aspect, in an eighth possible implementation of the apparatus, the measurement parameter includes at least one of the following: time information, signal quality of downlink signals of the first target cell and/or one or more neighboring cells of the first target cell, a geographical location of the terminal, and a distance between the terminal and the first target cell. By using the foregoing measurement parameter, a timing advance that matches an actual situation of the UE may be easily determined.

According to any one of the fourth aspect or the foregoing possible implementations of the fourth aspect, in a ninth possible implementation of the apparatus, the communication unit is further configured to: when or after sending the uplink data or signaling, send at least one of the following to the first target cell: an identifier of the serving cell and an identifier of the terminal in the serving cell; information about the at least one target cell; and a message for requesting configuration information of more target cells of the terminal. By sending the identifier of the serving cell and the identifier of the terminal in the serving cell to the first target cell, the first target cell can obtain data related to the terminal from the serving cell (for example, downlink data that is received by the serving cell but is not successfully sent to the terminal, uplink data that is successfully received by the serving cell from the terminal but is not successfully forwarded to a core network element, and/or context information of the terminal), to send the downlink data that is of the terminal and that is stacked in the serving cell to the terminal, and ensure that no packet loss occurs. By sending the information about the at least one target cell to the first target cell, the first target cell can determine whether the terminal needs configuration information of more target cells, and deliver the configuration information of the more target cells to the terminal in advance when necessary, to prevent the terminal from frequently requesting configuration information of target cells in a moving process. By sending, to the first target cell, a message for requesting configuration information of more target cells of the terminal, the first target cell can deliver the configuration information of the more target cells to the terminal in advance before the terminal is handed over to another cell.

According to any one of the fourth aspect or the foregoing possible implementations of the fourth aspect, in a tenth possible implementation of the apparatus, when the at least one target cell is a plurality of target cells, the at least one target cell includes at least two target cells for serial handover. When the at least one target cell includes at least two target cells for serial handover, the terminal already has configuration information of target cells for subsequent continuous handover in advance. In addition, the terminal does not discard previously received configuration information of target cells for serial handover each time after completing access to a new target cell, and discards the configuration information until an effective time corresponding to the configuration information expires, to avoid that the terminal frequently requests configuration information of target cells.

According to any one of the fourth aspect or the foregoing possible implementations of the fourth aspect, in an eleventh possible implementation of the apparatus, the apparatus further includes a sending unit. The sending unit is configured to: after the terminal is handed over to the first target cell, send notification information to the serving cell. The notification information indicates that the terminal is already handed over to another cell. After the terminal is handed over to another cell, the terminal sends the notification information to the original serving cell to notify that the terminal is handed over to another cell. The original serving cell can release a resource allocated to the terminal for use by another terminal, to improve resource utilization.

According to a fifth aspect, a cell handover apparatus is provided. The apparatus includes a determining unit, a first sending unit, a receiving unit, and a second sending unit. The determining unit is configured to determine a target cell. The first sending unit is configured to send a request message to the target cell, where the request message requests the target cell to reserve a resource for a terminal. The receiving unit is configured to receive configuration information from the target cell, where the configuration information includes the reserved resource, and effective time information corresponding to the reserved resource and/or uplink synchronization information associated with the target cell. The second sending unit is configured to send the configuration information to the terminal. Resources reserved for the terminal by potential target cells are delivered to the terminal in advance. Therefore, after camping on and being handed over to these potential target cells, the terminal may directly use the resources delivered in advance to perform uplink data or signaling transmission, to accelerate the uplink data or signaling transmission. In addition, uplink synchronization information associated with potential target cells is delivered to the terminal in advance, so that when a cell to which the terminal is handed over is the potential target cell, the terminal can perform uplink data and/or signaling transmission without using a contention-based random access process, to reduce an upload delay of data and/or signaling. In addition, effective time information corresponding to the resource reserved for the terminal is delivered to the terminal in advance. Therefore, after an effective time of the resource expires, if the resource is still not used by the terminal, the resource may be released and provided for another terminal to use, to improve resource utilization.

According to the fifth aspect, in a first possible implementation of the apparatus, the request message includes effective time information of a recommended resource, and/or recommended uplink synchronization information, and/or auxiliary information used to determine uplink synchronization information. The request message sent to the target cell includes the effective time information of the recommended resource, and/or the recommended uplink synchronization information, and/or the auxiliary information used to determine uplink synchronization information. This can help the target cell effectively determine the effective time information corresponding to the resource reserved for the terminal and the uplink synchronization information associated with the target cell.

According to the fifth aspect or the first possible implementation of the fifth aspect, in a second possible implementation of the apparatus, the uplink synchronization information includes a timing advance or a mapping relationship between different values of a measurement parameter and a timing advance. The uplink synchronization information includes the usage timing advance, so that data and/or signaling uploaded by the UE can be advantageously prevented from interfering with signal reception of the cell. The uplink synchronization information includes the mapping relationship between different values of the measurement parameter and the timing advance, so that the terminal can send the uplink data and/or signaling by using a timing advance that matches an actual situation of the terminal. Therefore, interference caused by data and/or signaling uploaded by the terminal to signal reception of the cell can be avoided more advantageously.

According to the second possible implementation of the fifth aspect, in a third possible implementation of the apparatus, the measurement parameter includes time information, signal quality of a downlink signal of a cell, a geographical location of the terminal, or a distance between the terminal and the cell. By using the foregoing measurement parameter, a timing advance that matches an actual situation of the terminal may be easily determined.

According to a sixth aspect, a cell handover apparatus is provided. The apparatus includes a receiving unit and a sending unit. The receiving unit is configured to receive a request message from a serving cell, where the request message requests a target cell to reserve a resource for a terminal. The sending unit is configured to send configuration information to the serving cell, where the configuration information includes the reserved resource, and effective time information corresponding to the reserved resource and/or uplink synchronization information associated with the target cell. The resource reserved by the target cell for the terminal is delivered by the serving cell to the terminal. Therefore, after camping and being handed over to the target cell, the terminal may directly use the resource to perform uplink data or signaling transmission, to accelerate uplink data or signaling transmission. In addition, the uplink synchronization information associated with the target cell is delivered by the serving cell to the terminal. In this case, when a cell to which the terminal is handed over is the target cell, the terminal may perform uplink data and/or signaling transmission without using a contention-based random access process, to reduce an upload delay of data and/or signaling. In addition, the effective time information corresponding to the resource reserved for the terminal is delivered by the serving cell to the terminal. Therefore, after an effective time of the resource expires, if the resource is still not used by the terminal, the resource may be released and provided for another terminal to use, to improve resource utilization.

According to the sixth aspect, in a first possible implementation of the apparatus, the request message includes effective time information of a recommended resource, and/or recommended uplink synchronization information, and/or auxiliary information used to determine uplink synchronization information; and the effective time information corresponding to the reserved resource and/or the uplink synchronization information associated with the target cell are/is set based on the effective time information of the recommended resource and/or the recommended uplink synchronization information and/or the auxiliary information used to determine the uplink synchronization information. By using the effective time information of the resource recommended by the serving cell and/or the recommended uplink synchronization information and/or the auxiliary information used to determine the uplink synchronization information, the target cell can effectively determine the effective time information corresponding to the resource reserved for the terminal and the uplink synchronization information associated with the target cell.

According to the sixth aspect or the first possible implementation of the sixth aspect, in a second possible implementation of the apparatus, the receiving unit is further configured to receive uplink information of the terminal; and the apparatus further includes a registration unit, configured to register the terminal as a terminal handed over to the target cell. When the uplink information of the terminal is received for the first time, the terminal is registered as a terminal handed over to the target cell, so that the target cell can learn that the terminal is currently handed over to the terminal, to perform downlink control information sending and data scheduling on the terminal in time.

According to a seventh aspect, a communication system is provided. The communication system includes the apparatus according to any one of the fifth aspect or the possible implementations of the fifth aspect and the apparatus according to any one of the sixth aspect or the possible implementations of the sixth aspect.

According to an eighth aspect, a communication apparatus is provided. The communication apparatus includes a communication interface and a logic circuit. The logic circuit performs the method according to any one of the first aspect or the possible implementations of the first aspect, the method according to any one of the second aspect or the possible implementations of the second aspect, or the method according to any one of the third aspect or the possible implementations of the third aspect.

According to an eighth aspect, a computer-readable storage medium is provided. The computer-readable storage medium stores program instructions, and when the program instructions are executed by a computer, the computer is enabled to perform the method according to any one of the first aspect or the possible implementations of the first aspect, the method according to any one of the second aspect or the possible implementations of the second aspect, or the method according to any one of the third aspect or the possible implementations of the third aspect.

According to a ninth aspect, a computer program is provided. The computer program includes program instructions, and when the program instructions are executed by a computer, the computer is enabled to perform the method according to any one of the first aspect or the possible implementations of the first aspect, the method according to any one of the second aspect or the possible implementations of the second aspect, or the method according to any one of the third aspect or the possible implementations of the third aspect.

According to a tenth aspect, a cell handover method is provided. The method includes: A terminal receives at least one piece of configuration information from a serving cell, where the at least one piece of configuration information is provided by at least one target cell, and the at least one piece of configuration information includes a resource reserved for the terminal, and effective time information corresponding to the resource and/or uplink synchronization information associated with the at least one target cell; the terminal obtains a first target cell to which the terminal is to be handed over, where the first target cell is determined under control of the serving cell; the terminal is handed over to the first target cell; and the terminal sends uplink information to the first target cell based on the configuration information, to notify that the terminal is already handed over to the first target cell. The configuration information includes the uplink synchronization information associated with the cell, and the terminal may perform uplink data and/or signaling transmission without using a contention-based random access process, to reduce an upload delay of data and/or signaling. The effective time information of the resource reserved for the terminal is included in the configuration information. After an effective time of the resource expires, if the resource is still not used by the terminal, the resource may be released and provided for another terminal to use, to improve resource utilization.

According to an eleventh aspect, a cell handover method is provided. The method includes: A terminal receives at least one piece of configuration information from a serving cell, where the at least one piece of configuration information is provided by at least one target cell, and the at least one piece of configuration information includes a resource reserved for the terminal; the terminal obtains a first target cell to which the terminal is to be handed over, where the first target cell is determined under control of the serving cell; the terminal is handed over to the first target cell; and the terminal sends simplified uplink signaling to the first target cell based on the configuration information, to notify that the terminal is already handed over to the first target cell. By using the simplified uplink signaling, the cell can quickly learn a cell in which the terminal is currently located, and perform downlink control information sending and data scheduling on the terminal in time. Therefore, fast scheduling/sending of downlink data can still be implemented while handover signaling overheads of the terminal are reduced.

According to a twelfth aspect, a cell handover apparatus is provided. The apparatus includes: a receiving unit, configured to receive at least one piece of configuration information from a serving cell, where the at least one piece of configuration information is provided by at least one target cell, and the at least one piece of configuration information includes a resource reserved for a terminal, and effective time information corresponding to the resource and/or uplink synchronization information associated with the at least one target cell; an obtaining unit, configured to obtain a first target cell to which the terminal is to be handed over, where the first target cell is determined under control of the serving cell; a handover unit, configured to hand over the terminal to the first target cell; and a sending unit, configured to send uplink information to the first target cell based on the configuration information, to notify that the terminal is already handed over to the first target cell. The configuration information includes the uplink synchronization information associated with the cell, and the terminal may perform uplink data and/or signaling transmission without using a contention-based random access process, to reduce an upload delay of data and/or signaling. The effective time information of the resource reserved for the terminal is included in the configuration information. After an effective time of the resource expires, if the resource is still not used by the terminal, the resource may be released and provided for another terminal to use, to improve resource utilization.

According to a thirteenth aspect, a cell handover apparatus is provided. The apparatus includes: a receiving unit, configured to receive at least one piece of configuration information from a serving cell, where the at least one piece of configuration information is provided by at least one target cell, and the at least one piece of configuration information includes a resource reserved for a terminal; an obtaining unit, configured to obtain a first target cell to which the terminal is to be handed over, where the first target cell is determined under control of the serving cell; a handover unit, configured to hand over the terminal to the first target cell; and a sending unit, configured to send simplified uplink signaling to the first target cell based on the configuration information, to notify that the terminal is already handed over to the first target cell. By using the simplified uplink signaling, the cell can quickly learn a cell in which the terminal is currently located, and perform downlink control information sending and data scheduling on the terminal in time. Therefore, fast scheduling/sending of downlink data can still be implemented while handover signaling overheads of the terminal are reduced.

According to a fourteenth aspect, a communication method is provided. The communication method includes: A terminal receives configuration information from a serving cell, where the configuration information includes a resource reserved by the serving cell for the terminal, and effective time information corresponding to the resource and/or uplink synchronization information associated with the serving cell; and the terminal sends uplink data and/or signaling to the serving cell based on the received configuration information. The configuration information includes the uplink synchronization information associated with the cell, and the terminal may perform uplink data and/or signaling transmission without using a contention-based random access process, to reduce an upload delay of data and/or signaling. The effective time information of the resource reserved for the terminal is included in the configuration information. After an effective time of the resource expires, if the resource is still not used by the terminal, the resource may be released and provided for another terminal to use, to improve resource utilization.

According to a fifteenth aspect, a communication apparatus is provided. The communication apparatus includes a receiving unit and a sending unit. The receiving unit is configured to receive configuration information from a serving cell, where the configuration information includes a resource reserved by the serving cell for a terminal, and effective time information corresponding to the resource and/or uplink synchronization information associated with the serving cell. The sending unit is configured to send uplink data and/or signaling to the serving cell based on the received configuration information. The configuration information includes the uplink synchronization information associated with the cell, and the terminal may perform uplink data and/or signaling transmission without using a contention-based random access process, to reduce an upload delay of data and/or signaling. The effective time information of the resource reserved for the terminal is included in the configuration information. After an effective time of the resource expires, if the resource is still not used by the terminal, the resource may be released and provided for another terminal to use, to improve resource utilization.

According to a sixteenth aspect, a communication method is provided. The communication method includes: determining configuration information corresponding to a terminal, where the configuration information includes a resource reserved by a serving cell for the terminal, and effective time information corresponding to the resource and/or uplink synchronization information associated with the serving cell; and sending the configuration information to the terminal. The configuration information includes the uplink synchronization information associated with the cell, and the terminal may perform uplink data and/or signaling transmission without using a contention-based random access process, to reduce an upload delay of data and/or signaling. The effective time information of the resource reserved for the terminal is included in the configuration information. After an effective time of the resource expires, if the resource is still not used by the terminal, the resource may be released and provided for another terminal to use, to improve resource utilization.

According to a seventeenth aspect, a communication apparatus is provided. The communication apparatus includes a determining unit and a sending unit. The determining unit is configured to determine configuration information corresponding to a terminal, where the configuration information includes a resource reserved by a serving cell for the terminal; and effective time information corresponding to the resource and/or uplink synchronization information associated with the serving cell. The sending unit is configured to send the configuration information to the terminal. The configuration information includes the uplink synchronization information associated with the cell, and the terminal may perform uplink data and/or signaling transmission without using a contention-based random access process, to reduce an upload delay of data and/or signaling. The effective time information of the resource reserved for the terminal is included in the configuration information. After an effective time of the resource expires, if the resource is still not used by the terminal, the resource may be released and provided for another terminal to use, to improve resource utilization.

According to an eighteenth aspect, a communication device is provided. The communication device includes a processor and a memory connected to the processor. The memory stores program instructions, and when the program instructions are executed by the processor, the processor is enabled to perform the method according to any one of the first aspect or the possible implementations of the first aspect, the method according to any one of the second aspect or the possible implementations of the second aspect, or the method according to any one of the third aspect or the possible implementations of the third aspect.

### BRIEF DESCRIPTION OF DRAWINGS

The following further describes features of this application and relationships between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. The specific accompanying drawings are described as follows:
FIG. 1 is a schematic diagram of a cell handover of UE in a connected state in the conventional technology;
FIG. 2 is a schematic diagram of a signal transmission scenario according to an embodiment of this application;
FIG. 3 is a schematic diagram of user plane and control plane protocol stacks of a base station and UE;
FIG. 4 is a schematic diagram of a system architecture according to an embodiment of this application;
FIG. 5A is a schematic diagram of a cell handover method according to a first embodiment of this application;
FIG. 5B is a schematic diagram of a step of selecting a target cell to be handed over to according to an embodiment of this application;
FIG. 5C is a schematic diagram of a step of selecting a target cell to be handed over to according to an embodiment of this application;
FIG. 5D is a schematic diagram of a cell handover method according to a second embodiment of this application;
FIG. 5E is a schematic diagram of a cell handover method according to a third embodiment of this application;
FIG. 6A is a schematic diagram of a cell handover apparatus according to a first embodiment of this application;
FIG. 6B is a schematic diagram of a cell handover apparatus according to a second embodiment of this application;
FIG. 6C is a schematic diagram of a cell handover apparatus according to a third embodiment of this application;
FIG. 7 is a schematic diagram of a communication system according to an embodiment of this application;
FIG. 8 is a schematic diagram of a cell handover method according to a first example implementation of this application;
FIG. 9A is a schematic diagram of an uplink data transmission method according to a second example implementation of this application;
FIG. 9B is a schematic diagram of a simplified handover procedure based on simplified uplink signaling according to an embodiment of this application;
FIG. 9C is a schematic diagram of an example mapping relationship according to an embodiment of this application;
FIG. 10A is a schematic diagram of a contention-based 4-step random access procedure;
FIG. 10B is a schematic diagram of a contention-based 2-step random access procedure;
FIG. 10C is a schematic diagram of a non-contention-based 4-step random access procedure;
FIG. 10D is a schematic diagram of a non-contention-based 2-step random access procedure;
FIG. 11A is a schematic diagram of a downlink data transmission method according to a third example implementation of this application;
FIG. 11B is a schematic diagram of delivering configuration information according to an embodiment of this application;
FIG. 12A is a schematic diagram of a cell handover method according to a fourth example implementation of this application;
FIG. 12B is a schematic diagram of a cell handover method according to a fifth example implementation of this application;
FIG. 12C is a schematic diagram of a communication method in a non-handover scenario according to a sixth example implementation of this application;
FIG. 13 is a schematic diagram of a communication apparatus according to an embodiment of this application; and
FIG. 14 is a schematic diagram of a communication device according to an embodiment of this application.

### DESCRIPTION OF EMBODIMENTS

In this specification and claims, the terms "first", "second", "third", and the like or similar terms such as a module A, a module B, and a module C are merely used to distinguish between similar objects, and do not represent a specific order of the objects. It may be understood that specific orders or sequences may be exchanged if permitted, so that the embodiments of this application described herein can be implemented in an order other than an order illustrated or described herein.

In the following descriptions, involved reference numerals such as S110 and S120 that indicate steps do not necessarily indicate that the steps are to be performed based on the order, and consecutive steps may be transposed if allowed, or may be performed simultaneously.

The term "include" used in this specification and claims should not be construed as being limited to the content listed below, and does not exclude other elements or steps. It should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only the components A and B. In addition, the term "a plurality of" in the specification and claims means two or more.

"One embodiment" or "an embodiment" mentioned in this specification indicates that a particular feature, structure or property that is described with reference to the embodiment is included in at least one embodiment of the present invention. Therefore, the terms "in some embodiments" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

To accurately describe technical content in this application and accurately understand the technical content in this application, the following explanations, descriptions, or definitions are first provided for terms used in this specification before specific implementations are described.

PLMN (Public Land Mobile Network, public land mobile network) refers to an operator or a network management system. The PLMN is a network that is established and operated by a government or an operator (for example, a China Mobile operator, a China Unicom operator, or a China Telecom operator) authorized by the government, to provide land mobile communication services for the public.

LTE (Long Term Evolution: long term evolution) is long-term evolution of a UMTS (Universal Mobile Telecommunications System: universal mobile telecommunications system) technical standard formulated by 3GPP (The 3rd Generation Partnership Project: the 3rd generation partnership project).

NR refers to a fifth generation (5G for short) radio access technology, also referred to as New Radio, has a full name in English of New Radio Access Technology in 3GPP, and may also be referred to as 5G-NR for short.

eNB (Evolved NodeB: evolved NodeB) is an LTE base station.

gNB is an NR base station.

eMBB (Enhanced Mobile Broadband: enhanced mobile broadband) refers to an improvement of performance such as user experience based on existing mobile broadband service scenarios. This is also an application scenario that is most close to people's daily life. The most intuitive experience of 5G in this respect is a significant increase in network speed. Even when a 4K HD video is watched, a peak value can reach 10 Gbps. For example, eMBB refers to a heavy-traffic mobile broadband service such as a 3D and ultra-HD video.

URLLC (Ultra-reliable and Low Latency Communication: ultra-reliable and low latency communication) features high reliability, low latency, and high availability. The URLLC includes the following scenarios and applications, industrial application and control, traffic safety and control, remote manufacturing, remote training, remote surgery, and the like. URLLC has huge potential in an autonomous driving business. In addition, URLLC is also important to a security industry. For example, URLLC may refer to a service that requires a low-latency and highly reliable connection, such as autonomous driving and industrial automation.

MTC refers to machine-type communication, has a full name in English of Machine-Type Communication, and may also be referred to as M2M for short. The MTC features low cost and enhanced coverage.

mMTC (Massive Machine-Type Communication: massive machine-type communication) refers to a large-scale Internet of Things service. Main scenarios include Internet of Vehicles, intelligent logistics, and intelligent asset management.

IoT refers to the Internet of Things, and has a full name in English of Internet of Things. The IoT is an extended and expanded network based on the Internet. The IoT combines various information sensing devices with the Internet to form a huge network, to implement interconnection between people, machines, and things anytime and anywhere. The IoT includes a narrow band Internet of Things.

NB-IoT refers a narrow band Internet of Things, and has a full name in English of Narrow Band Internet of Things. The NB-IoT features wide coverage, multiple connection, low rate, low cost, low power consumption, and excellent architecture, such as massive connections, lower power consumption, and lower chip costs. The NB-IoT may be applied to, for example, a smart water meter, smart parking, smart pet tracking, a smart bicycle, a smart smoke detector, a smart toilet, a smart vending machine, a wearable device, and the like.

D2D refers to device-to-device, and has a full name in English of Device-to-Device. D2D communication is a new technology that allows terminals to directly perform communication by reusing cell resources under control of a system.

CPE (Customer Premise Equipment: customer premise equipment) refers to a mobile signal access device that receives mobile signals and forwards the mobile signals through Wi-Fi signals. The CPE may also be a device that converts a high-speed 4G signal or a 5G signal into a Wi-Fi signal, and can allow a large quantity of mobile UEs to simultaneously access the Internet. The CPE can be widely used in rural areas, towns, hospitals, organizations, factories, and residential communities to provide wireless network access, to reduce costs of wired network deployment.

AR refers to augmented reality, and has a full name in English of Augmented Reality.

VR refers to virtual reality, and has a full name in English of Virtual Reality.

V2X refers to the Internet of Vehicles, and has a full name in English of vehicle to everything. The V2X is a key technology for a future intelligent transportation system. The V2X technology enables vehicles to communicate with each other, a vehicle to communicate with a base station, and base stations to communicate with each other, to obtain a series of traffic information such as a real-time road condition, road information, and pedestrian information, so as to improve driving safety, reduce congestion, improve traffic efficiency, provide in-vehicle entertainment information, and the like.

This application uses a signal transmission scenario as a background. FIG. 2 is a schematic diagram of a signal transmission scenario according to an embodiment of this application. As shown in FIG. 2, in a signal transmission scenario, there is a base station 10 and UE 20. The base station 10 is located in a cell and may send a signal to the UE 20, and the UE 20 may also send a signal to the base station 10.

The base station 10 is a radio base station in a network, and is also a network element of a radio access network. The base station 10 may be, for example, an eNB in an LTE base station, a gNB in a 5G base station, a satellite, a base station in a future communication system, or a base station in another communication system.

The base station 10 may be a macro base station or a small base station. The small base station may be, for example, a micro base station (Micro gNB/NodeB), a pico base station (Pico gNB/NodeB), or a femto base station (Femto gNB/NodeB).

The base station 10 may also be a TRP (transmission-reception point: transmission-reception point), which may receive a signal sent by the UE, and/or send a signal to the UE.

The base station 10 is responsible for all functions related to an air interface. Specifically, the base station 10 is responsible for a radio link maintenance function, to maintain a radio link with the UE 20, and is responsible for protocol conversion of radio link data and IP (Internet Protocol: Internet protocol) data quality monitoring. In addition, the base station 10 is further responsible for radio resource management functions, including radio link establishment and release, radio resource scheduling and allocation, and the like. In addition, the base station 10 is further responsible for some mobility management functions, including configuring the UE to perform measurement, evaluating radio link quality of the UE, making decisions on handover of the UE between cells, and the like.

The UE 20 may also be referred to as user equipment, a mobile station, or the like, and may be vehicle-mounted, portable, handheld, or the like. A physical device of the UE 20 may be completely independent of a mobile user. All information related to the user may be stored in a smart card (Subscriber Identity Module: SIM), and the smart card may be used on the UE 20. The UE 20 may complete direct interaction with the base station 10 over an air interface. The UE 20 may transmit and/or receive signals.

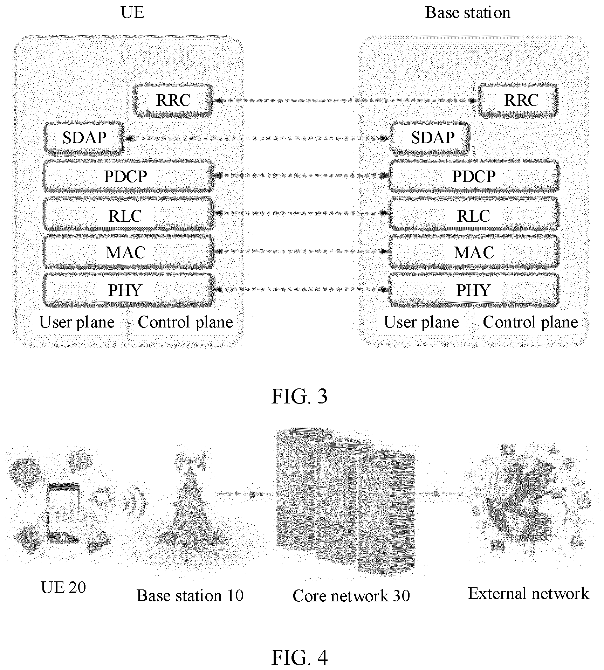

The base station 10 and the UE 20 may include a physical layer (physical layer: PHY), a media access control (Media Access Control: MAC) layer, a radio link control (Radio link control: RLC) layer, a packet data convergence protocol (Packet Data Convergence Protocol: PDCP) layer, a service data adaptation protocol (Service Data Adaptation Protocol: SDAP) layer, and a radio resource control (Radio Resource Control: RRC) layer. The base station 10 and the UE 20 may include a user plane (user plane) protocol and a control plane (control plane) protocol, separately. FIG. 3 is a schematic diagram of user plane and control plane protocol stacks of a base station and UE. It can be learned from FIG. 3 that the PHY, the MAC, the RLC, and the PDCP are located on a user plane and a control plane of the base station and a user plane and a control plane of the UE, the SDAP is located only on the user plane of the base station and the user plane of the UE, and the RRC is located on the control plane of the base station and the control plane of the UE.

In addition to being applicable to a conventional communication scenario between a base station and UE, this application is also applicable to a communication scenario between UEs, a communication scenario between base stations, a communication scenario between UE and a satellite, a communication scenario between an Internet of Vehicles, an Internet of Things, and an industrial Internet, or the like. In the communication scenario between UEs, at least one UE functions as a regular base station. In the communication scenario between base stations, at least one base station functions as conventional UE, for example, a wireless gateway device on a bus. In the communication scenario between UE and a satellite, the satellite functions as a conventional base station. Therefore, in this application, unless otherwise specified, the base station may include a conventional base station or any other suitable device that functions as a conventional base station in communication, and the UE may include conventional UE or any other suitable device that functions as conventional UE in communication.

This application is applicable to both a homogeneous network scenario and a heterogeneous network scenario, and is not limited to a transmission point, which may be multi-point coordinated transmission between a macro base station and a macro base station, a micro base station and a micro base station, and a macro base station and a micro base station. This application is applicable to both an FDD (Frequency Division Duplexing: frequency division duplexing) system and a TDD (Time Division Duplexing: time division duplexing) system. This application is also applicable to a low frequency scenario, a high frequency scenario, a terahertz scenario, an optical communication scenario, and the like. This application may be applicable to a 5G communication system, a satellite communication system, a future-evolved communication system, or another communication system. This is not limited in this application.

FIG. 4 is a schematic diagram of a system architecture according to an embodiment of this application. The system architecture shown in FIG. 4 includes a base station 10, UE 20, and a core network 30. The base station 10 and the UE 20 communicate with each other by using an air interface, and the base station 10 and the core network 30 communicate with each other. The base station 10 and the UE 20 are described in detail with reference to FIG. 2 and FIG. 3, and details are not described herein again.

Generally, a mobile communication network is divided into three parts: a base station subsystem, a network subsystem, and a system support part (such as security management). The core network 30 is located in the network subsystem, and a main function of the core network 30 is to connect call requests or data requests from the air interface to different networks. As a core part of the mobile communication network, the core network 30 plays a role of connecting the preceding and the following, and is mainly responsible for processing mobility management, session management, and data transmission of the UE. Specifically, the core network 30 mainly provides user connection, user management, and bearer connection (Access to), and serves as a bearer network to provide an interface for an external network. The user connection includes mobility management (Mobility Management: MM), call management (Call Management: CM), switching/routing, recording notification (completing a connection relationship to an intelligent network peripheral in combination with an intelligent network service), and the like. The user management includes user description, quality of service (quality of service: QoS) description (including description of user service QoS), user communication record (Accounting), virtual home environment (Virtual Home Environment: VHE) (Dialogue with an intelligent network platform provides a virtual home environment), and security (An authentication center provides security measures, including security management for mobile services and security processing for external network access). The bearer connection includes a connection to an external public switched telephone network (Public Switched Telephone Network: PSTN), an external circuit data network and a packet data network, an Internet (Internet), an intranet (Intranet), a short message service (Short Message Service: SMS) server, and the like. A basic service that can be provided by the core network includes mobile office, e-commerce, communication, an entertainment service, a travel and a location-based service, a telemetry (Telemetry) service, a simple message transfer service (monitoring and control), or the like.

The core network 30 may be a 5G core network. On the basis of an evolved packet core network (Evolved Packet Core Network: EPC), the 5G core network has three new enhancements: having a service-based architecture, supporting network slicing, and control plane and user plane separation. Compared with the 4G core network, the 5G core network 30 evolves to a separate architecture again. The separated architecture includes separation of network functions and control plane and user plane separation. The separation of network functions absorbs a design idea of network functions virtualization (Network Function Virtualization: NFV) cloud native, and constructs a network in a software-based, modular, and service-oriented manner. The control plane and user plane separation enables user plane functions to be deployed in distributed manner, in which the functions can be flexibly deployed on both the core network and the access network.

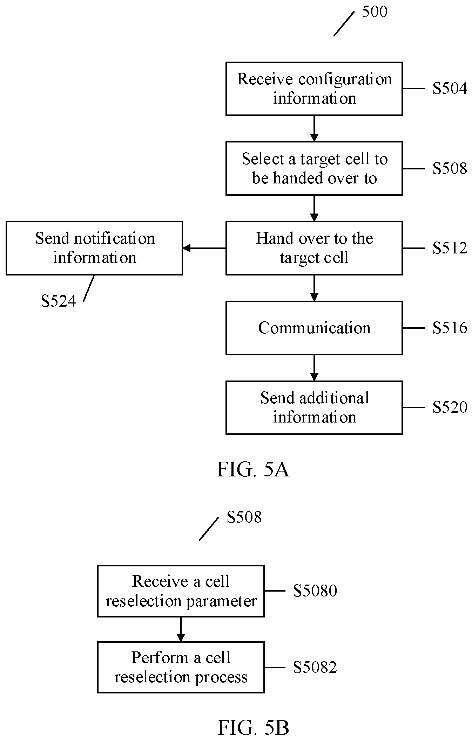

FIG. 5A is a schematic diagram of a cell handover method according to a first embodiment of this application. A method 500 shown in FIG. 5A includes steps S504 to S516.

In step S504, UE receives at least one piece of configuration information from a serving cell, where the at least one piece of configuration information is provided by at least one target cell. The UE may be in a connected state, an idle state, or an inactive state. The at least one target cell may be a cell to which the UE may be handed over. The configuration information includes at least a resource reserved by the at least one target cell for the UE. For example, the resource may include, but is not limited to, at least one of the following: a cell radio network temporary identity (Cell Radio Network Temporary Identity: C-RNTI), a scheduling request (Scheduling Request: SR), a random access channel (Random Access Channel: RACH) resource (for example, a common preamble (preamble) or a dedicated preamble), signaling radio bearer (Signal Radio Bearer: SRB) or data radio bearer (Data Radio Bearer: DRB) configuration, grant (grant) or configured grant (Configured Grant: CG) or grant free (Grant Free: GF) configuration, a key, compression algorithm configuration, physical layer (Physical Layer: PHY) and/or media access control (Media Access Control: MAC) layer and/or radio link control (Radio Link Control: RLC) layer and/or packet data convergence protocol (Packet Data Convergence Protocol: PDCP) layer and/or service data adaptation protocol (Service Data Adaptation Protocol: SDAP) layer configuration.

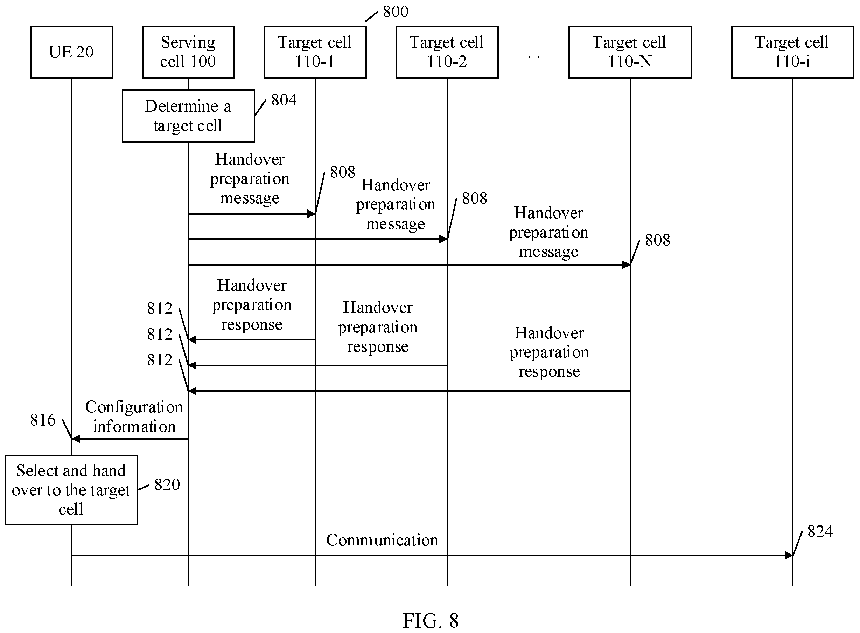

In step S508, the UE selects a first target cell to which the UE is to be handed over, where the first target cell is one of the at least one target cell. For example, but not limited to, the UE may select the first target cell to which the UE is to be handed over by using one of Solution 1, Solution 2, and Solution 3 mentioned in step S820 in FIG. 8.

In step S512, the UE is handed over to the first target cell based on the selection.

In step S516, the UE performs communication based on configuration information corresponding to the first target cell. Through step S516, the first target cell is notified that the UE is handed over to the first target cell.

The UE selects the target cell to which the UE is to be handed over and is handed over to the selected target cell based on the selection, that is, the UE independently selects the cell to which the UE is to be handed over and is handed over to the selected cell without network control. In this process, the UE does not need to upload a measurement report and the cell does not need to deliver a handover command, so that handover-related signaling overheads can be reduced, power consumption of the UE can be correspondingly reduced, and energy saving of the UE can be implemented.

In some embodiments, as shown in FIG. 5B, step S508 may include steps S5080 and S5082.

In step S5080, the UE receives a cell reselection parameter delivered by the serving cell.

In step S5082, the UE performs a cell reselection process based on the received cell reselection parameter to select the first target cell as a cell to which the UE is to be handed over. For example, the UE may select a cell to which the UE is to be handed over by using Solution 1 mentioned in step S820 in FIG. 8.

The UE selects the cell to which the UE is to be handed over through the cell reselection process, and can quickly select the cell to which the UE is to be handed over.

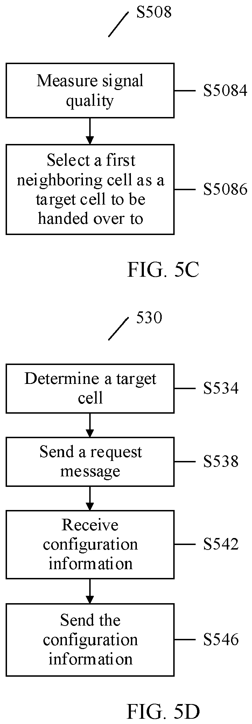

In some embodiments, as shown in FIG. 5C, step S508 may include steps S5084 and S5086.

In step S5084, the UE measures signal quality of at least one neighboring cell of the serving cell.

In step S5086, the UE selects a first neighboring cell from the at least one neighboring cell as the first target cell, where signal quality of the first neighboring cell satisfies a specified measurement event and the first neighboring cell is one of the at least one target cell.

The UE selects the cell to which the UE is to be handed over based on the measurement event, and can accurately select a cell to which the UE can be handed over.

In some embodiments, step S516 may further include: The UE sends uplink data or signaling. The uplink data or signaling may be data or signaling that needs to be uploaded by the UE immediately after the handover, or the uplink data or signaling may be simplified uplink signaling (Simplified UL Signaling) used to notify that the UE is already handed over to the first target cell. The UE notifies, by sending uplink data or signaling, that the UE is handed over to the selected target cell, so that the selected target cell can quickly learn which cell the UE is currently located in, and perform downlink control information sending and data scheduling on the UE in time. Therefore, fast scheduling/transmission of downlink data can still be implemented while handover signaling overheads of the UE are reduced.

In some embodiments, the configuration information includes uplink synchronization information associated with the at least one target cell. The configuration information includes the uplink synchronization information associated with the cell, and the UE may perform uplink data and/or signaling transmission without using a contention-based random access process, to reduce an upload delay of data and/or signaling.

In some embodiments, the configuration information includes a reserved resource and effective time information corresponding to the resource. The effective time information may be an effective start time of the resource, or a time period used to indicate an effective start time and an effective end time of the resource, or an effective end time of the resource (In this case, for example, but not limited to, the effective start time of the resource starts, by default, from when resource reservation is successful or delivery of a handover command (Handover Command: HO CMD) or a conditional handover command (Conditional Handover Command: CHO CMD) to the UE is successful). The effective time information of the resource reserved for the UE is included in the configuration information. After an effective time of the resource expires, if the resource is still not used by the UE, the resource may be released and provided for another UE to use, to improve resource utilization.

In some embodiments, the uplink synchronization information includes a timing advance. The uplink synchronization information includes the usage timing advance, so that data and/or signaling uploaded by the UE can be advantageously prevented from interfering with signal reception of the cell.

In some embodiments, the uplink synchronization information includes a mapping relationship between different values of a measurement parameter and a timing advance, and that the UE sends uplink data or signaling includes: The UE obtains an actual value of the measurement parameter; the UE determines a timing advance of the first target cell based on the actual value of the measurement parameter and the mapping relationship associated with the first target cell; and the UE sends the uplink data or signaling based on the determined timing advance. The uplink synchronization information includes the mapping relationship between different values of the measurement parameter and the timing advance, so that the UE can send uplink data and/or signaling by using a timing advance that matches an actual situation of the UE. Therefore, interference caused by data and/or signaling uploaded by the UE to signal reception of the cell can be avoided more advantageously.

In some embodiments, the measurement parameter includes at least one of the following: time information, signal quality of downlink signals of the first target cell and/or one or more neighboring cells of the first target cell, a geographical location of the UE, and a distance between the UE and the first target cell. In other words, for example, but not limited to, the measurement parameter may be of a single cell or of a plurality of cells, for example, of a serving cell only, of a single neighboring cell only, of a plurality of neighboring cells, of a serving cell and a plurality of neighboring cells, or may be a measurement parameter (for example, a location of the UE) at a UE granularity. By using the foregoing measurement parameter, a timing advance that matches an actual situation of the UE may be easily determined.

In some embodiments, the method may further include step S520. In step S520, when or after sending the uplink data or signaling, the UE sends at least one of the following to the first target cell: an identifier of the serving cell and an identifier of the UE in the serving cell, information about the at least one target cell; and a message for requesting configuration information of more target cells of the UE. The information about the at least one target cell may be, for example, but is not limited to, the at least one piece of configuration information that is provided by the at least one target cell and that is received by the UE from the serving cell. By sending the identifier of the serving cell and the identifier of the UE in the serving cell to the first target cell, the first target cell can obtain data related to the UE from the serving cell (for example, downlink data that is received by the serving cell but is not successfully sent to the UE, uplink data that is successfully received by the serving cell from the UE but is not successfully forwarded to a core network element, and/or context information of the UE), to send the downlink data that is of the UE and that is stacked in the serving cell to the UE, and ensure that no packet loss occurs. By sending the information about the at least one target cell to the first target cell, the first target cell can determine whether the UE needs configuration information of more target cells, and deliver the configuration information of the more target cells to the UE in advance when necessary, to prevent the UE from frequently requesting configuration information of target cells in a moving process. By sending, to the first target cell, a message for requesting configuration information of more target cells of the UE, the first target cell can deliver the configuration information of the more target cells to the UE in advance before the UE is handed over to another cell.

In some embodiments, when the at least one target cell is a plurality of target cells, the at least one target cell includes at least two target cells for serial handover. The target cells for the serial handover herein refer to cells to which the UE is handed over continuously (for example, it is assumed that the target cells for at least two serial handovers are target cells B 1, B2, and B3, the serial handover means that the UE is first handed over from the target cell B 1 to B2, and then the UE is handed over from cell B2 to cell B3 when appropriate). When the at least one target cell includes at least two target cells for serial handover, the UE already has configuration information of target cells for subsequent serial handover in advance. In addition, the UE does not discard previously received configuration information of target cells for serial handover each time after completing access to a new target cell, and discards the configuration information until an effective time corresponding to the configuration information expires, to avoid that the UE frequently requests configuration information of target cells.

In some embodiments, the method may further include step S524. In step S524, before or after the UE is handed over to the first target cell, the UE sends notification information to the serving cell, where the notification information indicates that the UE is already handed over to another cell. For example, but not limited to, in a hard handover case, before the UE communicates with the first target cell by using the resource allocated by the first target cell(for example, but not limited to, after receiving a handover command (HO CMD) or a conditional handover command (CHO CMD) and before leaving the serving cell), the UE sends notification information to the serving cell to indicate that the UE is already handed over to another cell. For example, but not limited to, in a soft handover case, before or after the UE is handed over to the first target cell, when the UE receives, from the first target cell, a message indicating disconnection from the original serving cell, the UE sends notification information to the serving cell to indicate that the UE is already handed over to another cell. Before or after the UE is handed over to another cell, the UE sends the notification information to the original serving cell to indicate that the UE is already handed over to another cell. The original serving cell can be disconnected from the original serving cell in time to stop downlink scheduling for the UE and release a resource allocated to the UE for use by another UE, to improve resource utilization.

FIG. 5D is a schematic diagram of a cell handover method according to a second embodiment of this application. The method 530 shown in FIG. 5D may be performed by, for example but not limited to, a serving cell of UE. The method 530 may include steps S534 to S546.

In step S534, a serving cell determines a target cell. The target cell is a cell to which UE may be handed over. For example, the target cell may be determined based on a movement track of the UE.

In step S538, the serving cell sends a request message to the target cell, where the request message requests the target cell to reserve a resource for the UE. The resources may include, for example, a C-RNTI, an SR, a RACH resource (for example, a public or dedicated preamble), SRB or DRB configuration, grant (grant) or CG or GF configuration, a key, compression algorithm configuration, and a PHY layer and/or a MAC layer and/or an RLC layer and/or a PDCP layer and/or SDAP configuration.

In step S542, the serving cell receives configuration information from the target cell, where the configuration information includes the reserved resource, and effective time information corresponding to the reserved resource and/or uplink synchronization information associated with the target cell. The effective time information may be an effective start time of the resource, an effective end time of the resource, or a time period used to indicate an effective start time and an effective end time of the resource.

In step S546, the serving cell sends the configuration information to the UE.

In the solution of this embodiment, resources reserved for the UE by potential target cells are delivered to the UE in advance. Therefore, after camping on and being handed over to these potential target cells, the UE may directly use the resources delivered in advance to perform uplink data or signaling transmission, to accelerate the uplink data or signaling transmission. In addition, in the solution of this embodiment, uplink synchronization information associated with the potential target cells is delivered to the UE in advance. In this case, when a cell to which the UE is handed over is the potential target cell, the UE can perform uplink data and/or signaling transmission without using a contention-based random access process, to reduce an upload delay of data and/or signaling. In addition, in the solution of this embodiment, the effective time information corresponding to the resource reserved for the UE is delivered to the UE in advance. Therefore, after an effective time of the resource expires, if the resource is still not used by the UE, the resource may be released and provided for another UE to use, to improve resource utilization.

In some embodiments, the request message includes effective time information of a recommended resource, and/or recommended uplink synchronization information, and/or auxiliary information used to determine uplink synchronization information. The request message sent by the serving cell to the target cell includes the effective time information of the recommended resource, and/or the recommended uplink synchronization information, and/or the auxiliary information used to determine uplink synchronization information. This can help the target cell effectively determine the effective time information corresponding to the resource reserved for the UE and the uplink synchronization information associated with the target cell.

In some embodiments, the uplink synchronization information may include a timing advance or a mapping relationship between different values of a measurement parameter and a timing advance. The uplink synchronization information includes the usage timing advance, so that data and/or signaling uploaded by the UE can be advantageously prevented from interfering with signal reception of the cell. The uplink synchronization information includes the mapping relationship between different values of the measurement parameter and the timing advance, so that the UE can send uplink data and/or signaling by using a timing advance that matches an actual situation of the UE. Therefore, interference caused by data and/or signaling uploaded by the UE to signal reception of the cell can be avoided more advantageously.

In some embodiments, the measurement parameter includes time information, signal quality of a downlink signal of a cell, a geographical location of the UE, or a distance between the UE and the cell. By using the foregoing measurement parameter, a timing advance that matches an actual situation of the UE may be easily determined.

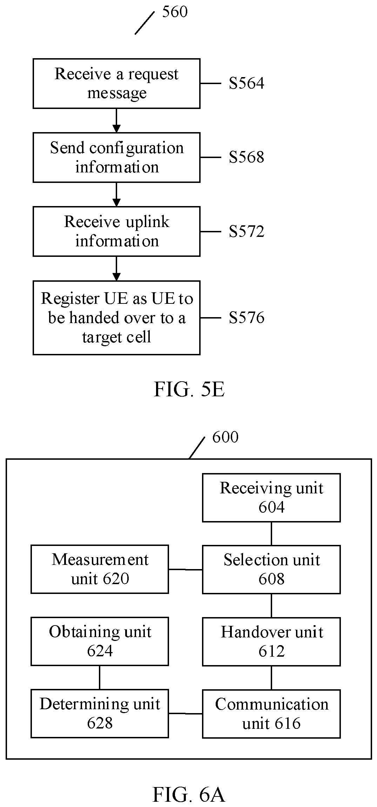

FIG. 5E is a schematic diagram of a cell handover method according to a third embodiment of this application. The method 560 shown in FIG. 5E may be performed by, for example but not limited to, a target cell to which UE may be handed over. The method 560 may include steps S564 to S576.

In step S564, a target cell receives a request message from a serving cell, where the request message requests the target cell to reserve a resource for UE.

In step S568, the target cell sends configuration information to the serving cell, where the configuration information includes the reserved resource, and effective time information corresponding to the reserved resource and/or uplink synchronization information associated with the target cell.

In the solution of this embodiment, the resource reserved by the target cell for the UE is delivered by the serving cell to the UE. Therefore, after camping and being handed over to the target cell, the UE may directly use the resource to perform uplink data or signaling transmission, to accelerate uplink data or signaling transmission. In addition, in the solution of this embodiment, the uplink synchronization information associated with the target cell is provided by the target cell to the serving cell and delivered to the UE, so that when a cell to which the UE is handed over is the target cell, the UE can perform uplink data and/or signaling transmission without using a contention-based random access process, to reduce an upload delay of data and/or signaling. In addition, in the solution of this embodiment, the effective time information corresponding to the resource reserved for the UE is provided by the target cell to the serving cell and delivered to the UE. Therefore, after an effective time of the resource expires, if the resource is still not used by the UE, the resource may be released and provided for another UE to use, to improve resource utilization.

In some embodiments, the request message includes effective time information of a recommended resource, and/or recommended uplink synchronization information, and/or auxiliary information used to determine uplink synchronization information; and the effective time information corresponding to the reserved resource and/or the uplink synchronization information associated with the target cell are/is set based on the effective time information of the recommended resource and/or the recommended uplink synchronization information and/or the auxiliary information used to determine the uplink synchronization information. By using the effective time information of the resource recommended by the serving cell and/or the recommended uplink synchronization information and/or the auxiliary information used to determine uplink synchronization information, the target cell can effectively determine the effective time information corresponding to the resource reserved for the UE and the uplink synchronization information associated with the target cell.

In some embodiments, the method 560 may further include steps S572 and S576. In step S572: Uplink information of the UE is received. For example, the uplink information may be uplink data and/or signaling to be uploaded immediately after the UE is handed over to the target cell, or the uplink information may be, for example, simplified uplink signaling used to notify that the UE is already handed over to the target cell. In step S576, the UE is registered as UE handed over to the target cell. When the uplink information of the UE is received for the first time, the UE is registered as the UE handed over to the target cell, so that the target cell can learn that the UE is currently handed over to the terminal, to perform downlink control information sending and data scheduling on the UE in time.

The foregoing describes in detail the cell handover method embodiments of this application with reference to FIG. 5A to FIG. 5E, and the following describes in detail cell handover apparatus embodiments in this application with reference to FIG. 6A to FIG. 6C. It should be understood that the description of the method embodiments corresponds to the description of the apparatus embodiments. Therefore, for a part that is not described in detail in the apparatus embodiments, refer to the foregoing method embodiments.

FIG. 6A is a schematic diagram of a cell handover apparatus according to a first embodiment of this application. An apparatus 600 shown in FIG. 6A may be implemented by, for example, but not limited to, the UE 20 or any other suitable device.

As shown in FIG. 6A, the apparatus 600 may include a receiving unit 604, a selection unit 608, a handover unit 612, and a communication unit 616. The receiving unit 604 is configured to receive at least one piece of configuration information from a serving cell, where the at least one piece of configuration information is provided by at least one target cell. The selection unit 608 is configured to select a first target cell to be handed over to, where the first target cell is one of the at least one target cell. The handover unit 612 is configured to hand over to the first target cell based on the selection. The communication unit 616 is configured to perform communication based on configuration information corresponding to the first target cell.

In some embodiments, the receiving unit 604 may be further configured to receive a cell reselection parameter delivered by the serving cell; and the selection unit 608 is further configured to perform a cell reselection process based on the received cell reselection parameter to select the first target cell as a cell to be handed over to.

In some embodiments, the apparatus 600 may further include a measurement unit 620, configured to measure signal quality of at least one neighboring cell of the serving cell. The selection unit 608 is further configured to determine signal quality of at least a first neighboring cell, so that a specified measurement event is satisfied and the first neighboring cell is one of the at least one target cell, and select the first neighboring cell as the first target cell.

In some embodiments, the communication unit 616 may be further configured to send uplink data or signaling.

In some embodiments, the configuration information may include uplink synchronization information associated with the at least one target cell.

In some embodiments, the configuration information may include a reserved resource and effective time information corresponding to the resource.

In some embodiments, the uplink synchronization information may include a timing advance.

In some embodiments, the uplink synchronization information may include a mapping relationship between different values of a measurement parameter and a timing advance. The apparatus 600 may further include: an obtaining unit 624, configured to obtain an actual value of the measurement parameter; and a determining unit 628, configured to determine a timing advance of the first target cell based on the actual value of the measurement parameter and the mapping relationship associated with the first target cell. The communication unit 616 may be further configured to send the uplink data or signaling based on the determined timing advance.

In some embodiments, the measurement parameter may include at least one of the following: time information, signal quality of downlink signals of the first target cell and/or one or more neighboring cells of the first target cell, a geographical location of the UE, and a distance between the UE and the first target cell.

In some embodiments, the communication unit 616 may be further configured to: when or after sending the uplink data or signaling, send at least one of the following to the first target cell: an identifier of the serving cell and an identifier of the UE in the serving cell, information about the at least one target cell; and a message for requesting configuration information of more target cells of the UE.

In some embodiments, when the at least one target cell is a plurality of target cells, the at least one target cell includes at least two target cells for serial handover.

In some embodiments, the apparatus 600 may further include a sending unit 632, configured to send notification information to the serving cell before or after the UE is handed over to the first target cell, where the notification information indicates that the UE is already handed over to another cell.

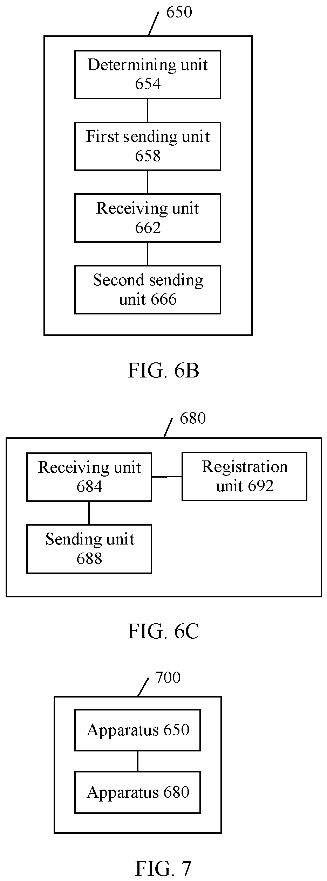

FIG. 6B is a schematic diagram of a cell handover apparatus according to a second embodiment of this application. An apparatus 650 shown in FIG. 6B may be implemented by, for example, but not limited to, a base station of a serving cell of UE or any other suitable device.

As shown in FIG. 6B, the apparatus 650 may include a determining unit 654, a first sending unit 658, a receiving unit 662, and a second sending unit 666. The determining unit 654 is configured to determine a target cell. The first sending unit 658 is configured to send a request message to the target cell, where the request message requests the target cell to reserve a resource for UE. The receiving unit 662 is configured to receive configuration information from the target cell, where the configuration information includes the reserved resource, and effective time information corresponding to the reserved resource and/or uplink synchronization information associated with the target cell. The second sending unit 666 is configured to send the configuration information to the UE.

In some embodiments, the request message includes effective time information of a recommended resource, and/or recommended uplink synchronization information, and/or auxiliary information used to determine uplink synchronization information.

In some embodiments, the uplink synchronization information may include a timing advance or a mapping relationship between different values of a measurement parameter and a timing advance.

In some embodiments, the measurement parameter may include time information, signal quality of a downlink signal of a cell, a geographical location of the UE, or a distance between the UE and the cell.

FIG. 6C is a schematic diagram of a cell handover apparatus according to a third embodiment of this application. An apparatus 680 shown in FIG. 6C may be implemented by, for example, but not limited to, a base station of a target cell to which the UE may be handed over or any other suitable device.

As shown in FIG. 6C, the apparatus 680 may include a receiving unit 684 and a sending unit 688. The receiving unit 684 is configured to receive a request message from a serving cell, where the request message requests a target cell to reserve a resource for UE. The sending unit 688 is configured to send configuration information to the serving cell, where the configuration information includes the reserved resource, and effective time information corresponding to the reserved resource and/or uplink synchronization information associated with the target cell.

In some embodiments, the request message includes effective time information of a recommended resource, and/or recommended uplink synchronization information, and/or auxiliary information used to determine uplink synchronization information; and the effective time information corresponding to the reserved resource and/or the uplink synchronization information associated with the target cell are/is set based on the effective time information of the recommended resource and/or the recommended uplink synchronization information and/or the auxiliary information used to determine the uplink synchronization information.

In some embodiments, the receiving unit 684 may be further configured to receive uplink information of the UE. The apparatus 680 further includes a registration unit 692, configured to register the UE as UE handed over to the target cell.

FIG. 7 is a schematic diagram of a communication system according to an embodiment of this application. As shown in FIG. 7, a communication system 700 may include the apparatus 650 shown in FIG. 6B and the apparatus 680 shown in FIG. 6C.

The following describes in detail example specific implementations of the cell handover solution in this application by using an example in which UE in a connected state performs a cell handover.

FIG. 8 is a schematic diagram of a cell handover method according to a first example implementation of this application. As shown in FIG. 8, a cell handover method 800 includes steps S804 to S824.

In step S804, a serving cell 100 determines target cells 110-1, 110-2, ..., and 110-N of UE 20 that is in a connected state. N is a positive integer. The target cells 110-1, 110-2, ..., and 110-N are cells to which the UE 20 may be handed over, and a number of the target cells may be one or more. For example, but not limited to, the serving cell 100 may obtain the target cells 110-1, 110-2, ..., and 110-N by prediction based on a movement track of the UE 20, and the like.

In step S808, the serving cell 100 sends a handover preparation (HO preparation) message to the target cells 110-1, 110-2, ..., and 110-N, separately. The handover preparation message requests the target cells to reserve resources for the UE 20.

In step S812, the target cells 110-1, 110-2, ..., and 110-N separately send a handover preparation response (HO preparation response) including configuration information to the serving cell 100. The configuration information sent by the target cells 110-1, 110-2, ..., and 110-N may be the same or different.

The configuration information may only include the resources reserved for the UE 20. The reserved resource may include, for example, but is not limited to, at least one of the following: a C-RNTI, an SR, a RACH resource (for example, a public or dedicated preamble), SRB or DRB configuration, grant (grant) or CG or GF configuration, a key, compression algorithm configuration, and a PHY layer and/or a MAC layer and /or an RLC layer and/or a PDCP layer and/or SDAP configuration.

Alternatively, the configuration information may include a resource reserved for the UE 20, and effective time information corresponding to the reserved resource and/or uplink synchronization information associated with the target cell.

The effective time information may be, for example, an effective start time of the reserved resource, or an effective time period of the reserved resource, where the time period is defined by an effective start time and an effective end time, or an effective end time of the reserved resource (In this case, for example, but not limited to, the effective start time of the resource starts, by default, from when resource reservation is successful or delivery of a handover command (HO CMD) or a conditional handover command (CHO CMD) to the UE is successful). The configuration information may include one or more sets of resources reserved for the UE 20. Each set of resources may correspond to same or different effective time information.

The uplink synchronization information may be, for example, a timing advance (Timing Advance: TA), or a mapping relationship between different values of a measurement parameter and a TA. The measurement parameter may include, for example, but is not limited to, one or more of the following: time information, signal quality of downlink signals of a serving cell and/or one or more neighboring cells of the serving cell, a geographical location of UE, and a distance between UE and a cell. The time information may refer to, for example, a specific time (accurate to second), or the like. The signal quality of the downlink signal may be, for example, a reference signal received power (Reference Signal Received Power: RSRP) value, a reference signal received quality (Reference Signal Receiving Quality: RSRQ) value, a signal to interference plus noise ratio. (Signal to Interference plus Noise Ratio: SINR) value, a channel quality indicator (Channel Quality Indication: CQI) value, and/or a channel state information (Channel State Information: CSI) value. The signal quality of the downlink signal may be, for example, but is not limited to, of a single cell, of a single beam (beam), and/or of a plurality of cells and/or beams. The signal quality of the downlink signal may be, for example, but is not limited to, measured based on one or more of the following: a synchronization signal block (Synchronization Signal Block: SSB), a channel state information-reference signal (Channel State Information - Reference Signal: CSI-RS), a demodulation reference signal (Demodulation Reference Signal: DMRS), and the like.

If the request message sent by the serving cell 100 to the target cells 110-1, 110-2, ..., and 110-N includes effective time information of a recommended resource, the target cells 110-1, 110-2, ..., and 110-N may set the effective time information of the resource reserved for the UE 20 with reference to the effective time information of the recommended resource.

If the request message sent by the serving cell 100 to the target cells 110-1, 110-2..., and 110-N includes recommended uplink synchronization information and/or recommended auxiliary information used to determine uplink synchronization information, the target cells 110-1, 110-2, ..., and 110-N may set the uplink synchronization information associated with the target cell with reference to the recommended uplink synchronization information and/or the auxiliary information. The auxiliary information used to determine uplink synchronization information may include, for example, but is not limited to, one or more of the following: information about a location, a speed, a moving direction, and/or a height of the UE 20; downlink RSRPs of the serving cell 100 and/or neighboring cells of the serving cell 100; a TA from the UE 20 to the serving cell 100, and the like.

In step S816, the serving cell 100 delivers the configuration information received from the target cells 110-1, 110-2, ..., and 110-N to the UE 20 by using the base station of the serving cell 100. For example, but not limited to, the serving cell 100 may deliver the configuration information to the UE 20 in advance by using a handover command (HO CMD) or a conditional handover command (CHO CMD) before the UE 20 performs a cell handover.

Optionally, the serving cell 100 may further deliver identification information of the target cells 110-1, 110-2, ..., and 110-N to the UE 20. The identification information may include, for example, but is not limited to, frequencies, cell lists, and/or beam lists of the target cells 110-1, 110-2, ..., and 110-N.

In step S820, after receiving the configuration information delivered by the serving cell 100 and optionally the identification information of the target cells 110-1, 110-2, ..., and 110-N, the UE 20 independently selects a target cell to which the UE 20 is to be handed over without network control, and the UE 20 is handed over to the selected target cell. For ease of description, the independently selected target cell is referred to as a target cell 110-i below.

The UE 20 may independently select the target cell 110-i to which the UE 20 is to be handed over by using, but is not limited to, one of three schemes.

In solution 1, the UE 20 independently selects a target cell to which the UE 20 is to be handed over by performing a cell reselection (Cell Re-selection) process performed by UE in an idle state. Specifically, the UE 20 first receives a cell reselection parameter delivered by the serving cell 100. The cell reselection parameter may be, for example, a related parameter included in a system information block (System Information Block: SIB) 2 in system information delivered by the serving cell 100 by using a broadcast channel. The related parameter is described, for example, in detail in the 3GPP TS 38.331 V16.2.0 protocol, and details are not described herein again. Alternatively, the cell reselection parameter may be, for example, a cell reselection-related parameter that is delivered by the serving cell 100 to the UE 20 in radio resource control (Radio Resource Control: RRC) configuration. The UE 20 then performs a cell reselection process based on the received cell reselection parameter to find a neighboring cell on which the UE 20 can camp. For example, RSRPs of neighboring cells of the serving cell 100 may be measured in a cell reselection process, and then a neighboring cell on which the UE 20 can camp is determined based only on the measured RSRP of the neighboring cell. Alternatively, for example, RSRPs of the serving cell 100 and neighboring cells of the serving cell 100 may be measured in the cell reselection process, and then a neighboring cell on which the UE 20 can camp is determined based on the measured RSRPs of the serving cell 100 and neighboring cells of the serving cell 100 (for example, a neighboring cell that meets event A3, that is, a neighboring cell whose RSRP is x dB higher than the RSRP of the serving cell 100). Finally, the UE 20 selects an appropriate neighboring cell from the found neighboring cells as the target cell to which the UE 20 is to be handed over. The appropriate neighboring cell may be, for example, a neighboring cell with best signal quality or highest priority. Alternatively, optionally, when the identification information of the target cells 110-1, 110-2, ..., and 110-N that are delivered in advance by the serving cell 100 is received, the appropriate neighboring cell can only be selected from, for example, the target cells 110-1, 110-2, ..., and 110-N.

In solution 2, the UE 20 measures signal quality of at least one neighboring cell of the serving cell 100, or measures signal quality of the serving cell 100 and at least one neighboring cell of the serving cell 100. The UE 20 checks whether a cell whose signal quality satisfies a specified measurement event exists in the at least one neighboring cell, and the cell is one of the target cells 110-1, 110-2, ..., and 110-N. If a check result is positive, the UE 20 selects the neighboring cell that meets the condition as the target cell to which the UE 20 is to be handed over.

The specified measurement event is notified in advance by the serving cell 100 to the UE 20, and may be, for example, but is not limited to, one or more of the following measurement events: an event A1, an event A2, an event A3, an event A4, an event A5, an event A6, an event B1, and an event B2. The event A1 indicates that signal quality of a serving cell becomes higher than a threshold, the event A2 indicates that signal quality of a serving cell becomes lower than a threshold, the event A3 indicates that a hysteresis of a neighboring cell is higher than a hysteresis of a primary serving cell, the event A4 indicates that signal quality of a neighboring cell is higher than a threshold, the event A5 indicates that signal quality of a serving cell is lower than a threshold 1 and signal quality of a neighboring cell is higher than a threshold 2, the event A6 indicates that a hysteresis of a neighboring cell is higher than a hysteresis of a primary serving cell, the event B1 indicates that signal quality of a neighboring cell of an inter-system is higher than a threshold, and the event B2 indicates that signal quality of a primary serving cell is lower than a threshold and signal quality of a neighboring cell of an inter-system is higher than a threshold. Events A1 to A6 and events B1 to B2 are described in detail in the 3GPP TS 38.331 V16.2.0 protocol, and details are not described herein again.

In solution 3, different from solution 1 and solution 2, a network does not deliver any parameter to affect the UE. Therefore, how the UE selects a target cell to which the UE is to be handed over is completely determined by the UE.

Optionally, after the UE 20 is handed over to the target cell 110-i, if the target cell 110-i is one of the target cells 110-1, 110-2, ..., and 110-N, the UE 20 has configuration information corresponding to the target cell 110-i, so the UE 20 obtains information such as a C-RNTI and a key of the target cell 110-i in advance. Therefore, after being handed over to the target cell 110-i, the UE 20 may directly monitor downlink control information of the cell to receive downlink data.

Optionally, in step S824, the UE 20 communicates with the autonomously selected target cell 110-i to notify that the UE 20 is already handed over to the target cell 110-i.

Optionally, after notifying that the UE 20 is already handed over to the target cell 110-i, the target cell 110-i may then directly perform downlink data transmission and downlink control information scheduling for the UE 20 by using an allocated C-RNTI and related resources.

In the solution of the first example implementation, the UE independently selects the target cell to which the UE is to be handed over and the UE is handed over to the selected target cell. In this process, the UE does not need to upload a measurement report and the cell does not need to deliver a handover instruction. Therefore, compared with existing network-controlled handover, signaling overheads required for handover are reduced, and UE energy saving can be implemented.

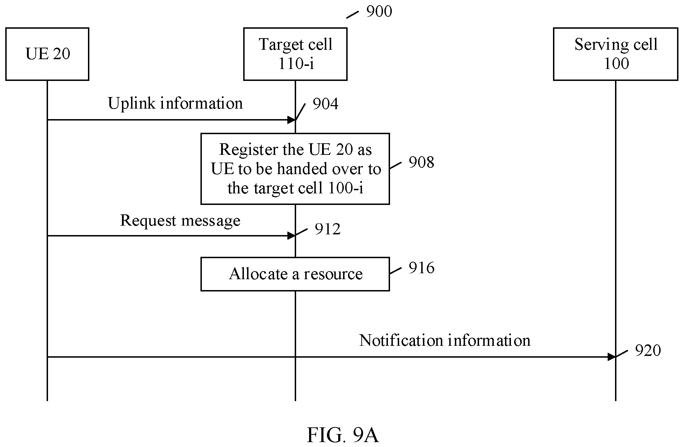

FIG. 9A is a schematic diagram of an uplink data transmission method according to a second example implementation of this application. A method 900 shown in FIG. 9A is an example implementation of step S824 shown in FIG. 8. The method 900 may include steps S904 to S920.

In step S904, after the UE 20 is handed over to the independently selected target cell 110-i, the UE 20 sends uplink information to the base station of the target cell 110-i to notify that the UE 20 is already handed over to the target cell 110-i.

If the UE 20 has uplink data and/or signaling to be uploaded immediately after the UE 20 is handed over to the target cell 110-i, the uplink information may be uplink data and/or signaling to be uploaded by the UE 20.

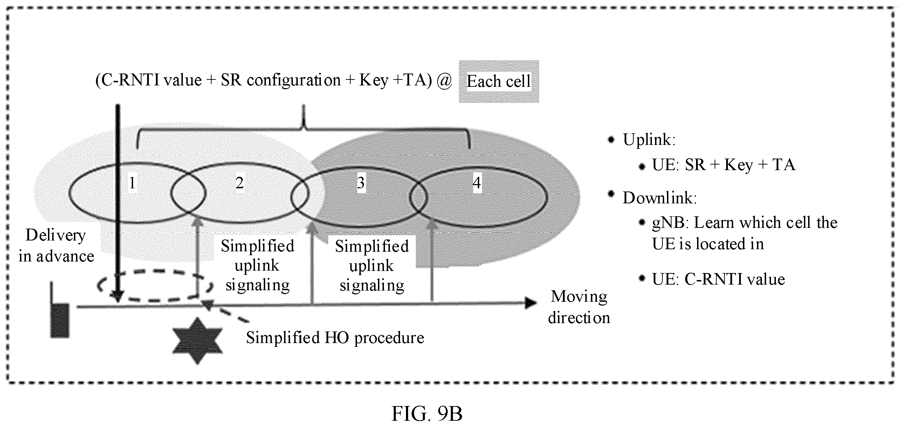

If the UE 20 has no uplink data and/or signaling to be uploaded immediately after the UE 20 is handed over to the target cell 110-i, the uplink information may be simplified uplink signaling (Simplified UL Signaling). FIG. 9B is a schematic diagram of a simplified handover procedure based on simplified uplink signaling according to an embodiment of this application. When UE is handed over from a cell 1 to a cell 2, from the cell 2 to a cell 3, and from the cell 3 to a cell 4, if the UE does not have uplink data and/or signaling to be uploaded immediately after the handover, the UE sends simplified uplink signaling to a target cell of the current handover, to notify that the UE is already handed over to the target cell.

The simplified uplink signaling may be, for example, but is not limited to, one of the following: a dedicated preamble, a dedicated sounding reference signal (Sounding Reference Signal: SRS), a dedicated scheduling request (Scheduling Request: SR), an uplink control indication (Uplink Control Indication: UCI) sent by a configured grant (Configured Grant: CG) or a grant free (Grant Free: GF), a MAC control element (Control Element: CE) sent by the CG or the GF, a radio resource control (Radio Resource Control: RRC) message sent by the CG or the GF, a common random access channel message including a UE identifier (for example, a C-RNTI), a common SRS including a UE identifier, a common SR including a UE identifier, and a resource message (Grant) including a UE identifier.

The UE 20 sends the uplink information to the target cell 110-i in the following scenarios.

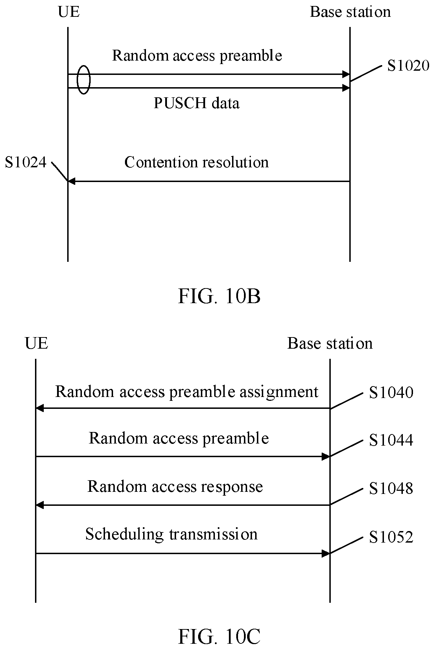

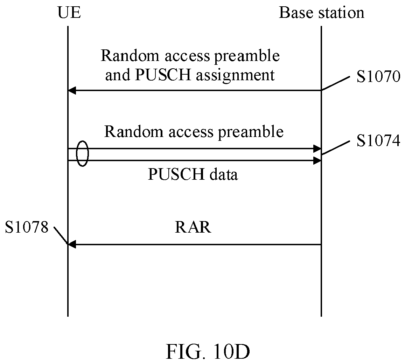

In a first case, the target cell 110-i is one of the target cells 110-1, 110-2, ..., and 110-N, and the configuration information that is corresponding to the target cell 110-i and that is delivered by the serving cell 100 to the UE 20 in advance includes only a resource reserved for the UE 20, but does not include effective time information corresponding to the reserved resource and uplink synchronization information associated with the target cell 110-i. For the first case, the UE 20 uses the reserved resource to send the uplink information to the target cell 110-i through a non-contention-based random access procedure (for example, the non-contention-based random access procedure shown in FIG. 10C or FIG. 10D).

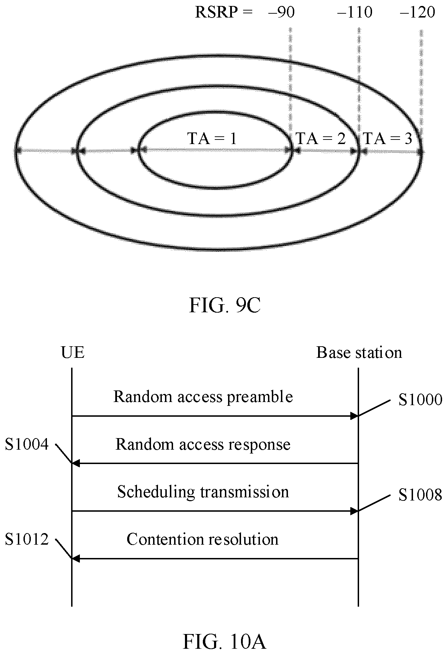

In a second case, the target cell 110-i is one of the target cells 110-1, 110-2..., and 110-N, and the configuration information that is corresponding to the target cell 110-i and that is delivered by the serving cell 100 to the UE 20 in advance includes a resource reserved for the UE 20 and effective time information corresponding to the reserved resource, but does not include uplink synchronization information associated with the target cell 110-i. For the second case, the UE 20 first determines, based on the effective time information corresponding to the reserved resource, whether the reserved resource is currently effective. If the reserved resource is currently effective, the UE 20 uses the reserved resource to send the uplink information to the target cell 110-i through a non-contention-based random access procedure (for example, the non-contention-based random access procedure shown in FIG. 10C or FIG. 10D). If the reserved resource is not currently effective, the UE 20 sends the uplink information to the target cell 110-i through a contention-based random access procedure (for example, the contention-based random access procedure shown in FIG. 10A or FIG. 10B).

In a third case, the target cell 110-i is one of the target cells 110-1, 110-2, ..., and 110-N, and the configuration information that is corresponding to the target cell 110-i and that is delivered by the serving cell 100 to the UE 20 in advance includes a resource reserved for the UE 20 and uplink synchronization information associated with the target cell 110-i, but does not include effective time information corresponding to the reserved resource (In this case, the resource reserved for the UE 20 is effective by default). For the third case, the UE 20 uses the reserved resource to send the uplink information to the target cell 110-i based on the uplink synchronization information.

If the uplink synchronization information is a TA, the UE 20 uses the reserved resource to send the uplink information to the target cell 110-i based on the TA.

If the uplink synchronization information is a mapping relationship between different values of a measurement parameter and a TA, the UE 20 first obtains an actual value of the measurement parameter, then retrieves a TA corresponding to the actual value from the mapping relationship, and finally uses the reserved resource to send the uplink information to the target cell 110-i based on the retrieved TA.

FIG. 9C is a schematic diagram of an example mapping relationship according to an embodiment of this application. In the example mapping relationship shown in FIG. 9C, the measurement parameter is a downlink RSRP, and the example mapping relationship is { {downlink RSRP < -90 dbm, TA = 1}, {-90 dbm ≤ downlink RSRP ≤-110 dbm, TA = 2}, {downlink RSRP > -110 dbm, TA = 3 } }. For the example mapping relationship shown in FIG. 9C, the UE 20 first measures an actual value of the downlink RSRP. Then, the UE 20 retrieves, from the example mapping relationship, a TA corresponding to the actual value of the downlink RSRP. When the actual value of the downlink RSRP is less than -90 dbm, a corresponding TA is equal to 1. When the actual value of the downlink RSRP is greater than or equal to -90 dbm and less than or equal to -110 dbm, a corresponding TA is equal to 2. When the actual value of the downlink RSRP is greater than -110 dbm, a corresponding TA is equal to 3. Finally, the UE 20 uses the reserved resource to send the uplink information to the target cell 110-i based on the retrieved TA.

In a fourth case, the target cell 110-i is one of the target cells 110-1, 110-2, ..., and 110-N, and the configuration information that is corresponding to the target cell 110-i and that is delivered by the serving cell 100 to the UE 20 in advance includes a resource reserved for the UE 20, effective time information corresponding to the reserved resource, and uplink synchronization information associated with the target cell 110-i. For the fourth case, the UE 20 first determines, based on the effective time information corresponding to the reserved resource, whether the reserved resource is currently effective. If the reserved resource is not currently effective, the UE 20 sends the uplink information to the target cell 110-i through a contention-based random access procedure (for example, the contention-based random access procedure shown in FIG. 10A or FIG. 10B). If the reserved resource is currently effective, the UE 20 uses the reserved resource to send the uplink information to the target cell 110-i based on the uplink synchronization information. If the uplink synchronization information is a TA, the UE 20 uses the reserved resource to send the uplink information to the target cell 110-i based on the TA. If the uplink synchronization information is a mapping relationship between different values of a measurement parameter and a TA, the UE 20 first obtains an actual value of the measurement parameter, then retrieves a TA corresponding to the actual value from the mapping relationship, and finally uses the reserved resource to send the uplink information to the target cell 110-i based on the retrieved TA.

In a fifth case, the target cell 110-i is not one of the target cells 110-1, 110-2, ..., and 110-N. In this case, the UE 20 sends the uplink information to the target cell 110-i through a contention-based random access procedure (for example, the contention-based random access procedure shown in FIG. 10A or FIG. 10B).

In step S908, after receiving the uplink information sent by the UE 20, the target cell 110-i registers the UE 20 as UE that is handed over to the target cell 110-i.

Optionally, when the uplink information is sent by the UE 20 through a contention-based random access procedure, the target cell 110-i allocates a corresponding resource to the UE 20.

Optionally, the method 900 may further include steps S912 and S916. In step S912, when or after the UE 20 sends the uplink information, the UE 20 sends a request message to the base station of the target cell 110-i, to request the target cell 110-i to allocate a resource to the UE 20. In step S916, after receiving the request message from the UE 20, the target cell 110-i allocates the corresponding resource to the UE 20.

Optionally, the method 900 may further include step S920. In step S920, before or after the UE 20 is handed over to the target cell 110-i, the UE 20 sends notification information to the base station of the serving cell 100, to notify that the UE 20 is already handed over to the target cell 110-i. For example, but not limited to, in a hard handover case, before the UE 20 uses the resource allocated by the target cell 110-i to communicate with the target cell 110-i (for example, but not limited to, after receiving a handover command (HO CMD) or a conditional handover command (CHO CMD) and before leaving the serving cell 100), the UE 20 sends notification information to the serving cell 100 to indicate that the UE 20 is already handed over to another cell. For example, but not limited to, in a soft handover case, before or after the UE 20 is handed over to the target cell 1 10-i, when the UE 20 receives, from the target cell 110-i, a message indicating disconnection from the original serving cell, the UE 20 sends notification information to the serving cell 100 to indicate that the UE 20 is already handed over to another cell.

Through step S920, the serving cell 100 can be disconnected from the original serving cell in time to stop downlink scheduling for the UE and release a resource allocated to the UE 20 for use by another UE, to improve resource utilization.

In the solution of the second example implementation, resources reserved for the UE by potential target cells are delivered to the UE in advance. Therefore, after camping on and being handed over to these potential target cells, the UE may directly use the resources delivered in advance to perform uplink data or signaling transmission, to accelerate the uplink data or signaling transmission.

In addition, in the solution of the second example implementation, the UE sends uplink information after camping on and being handed over to a new cell (for example, uplink data and/or signaling that the UE immediately uploads, or simplified uplink signaling (simplified UL signaling)), so that the new cell can quickly learn which cell the UE is currently in, and perform downlink control information sending and data scheduling on the UE in a timely manner. Therefore, fast scheduling/sending of downlink data can still be satisfied while handover signaling overheads of the UE are saved.

FIG. 10A is a schematic diagram of a contention-based 4-step random access procedure. As shown in FIG. 10A, the contention-based 4-step random access procedure includes steps S1000 to S1012. In step S1000, UE sends a random access preamble (Random Access Preamble) (namely, a message 1, Msg1) to a base station gNB of a cell. In step S 1004, the base station gNB of the cell sends a random access response (Random Access Response: RAR) (namely, a message 2, Msg2) to the UE. In step S1008, the UE performs a first uplink transmission on an uplink shared channel (namely, a message 3, Msg3). In step S1012, the base station gNB of the cell sends a contention resolution message (namely, a message 4, Msg4) to the UE.

FIG. 10B is a schematic diagram of a contention-based 2-step random access procedure. As shown in FIG. 10B, the contention-based 2-step random access procedure includes steps S1020 and S1024. In step S1020, UE sends a random access preamble (Random Access Preamble) and physical uplink shared channel (Physical Uplink Shared Channel: PUSCH) data (namely, a message A, Msg A) to a base station gNB of a cell. In step S1024, the base station gNB of the cell sends a contention resolution message (namely, a message B, Msg B) to the UE.

FIG. 10C is a schematic diagram of a non-contention-based 4-step random access procedure. As shown in FIG. 10C, the non-contention-based 4-step random access procedure includes steps S1040 to S1052. In step S1040, a base station of a cell assigns a non-contention-based random access preamble (namely, a message 0, Msg0) to UE by using downlink dedicated signaling. In step S1044, the UE sends the assigned random access preamble (Msg1) on an RACH. In step S1048, the base station gNB of the cell sends an RAR (Msg2) to the UE. In step S1052, the UE performs a first uplink transmission (Msg3) on an uplink shared channel.

FIG. 10D is a schematic diagram of a non-contention-based 2-step random access procedure. As shown in FIG. 10D, the non-contention-based 2-step random access procedure includes steps S1070 to S1078. In step S1070, a base station of a cell assigns a non-contention-based random access preamble and a PUSCH (namely, a message 0, Msg0) to UE by using downlink dedicated signaling. In step S1074, the UE sends the assigned random access preamble and uplink data (Msg A) on an RACH. In step S1078, the base station gNB of the cell sends an RAR (Msg B) to the UE.

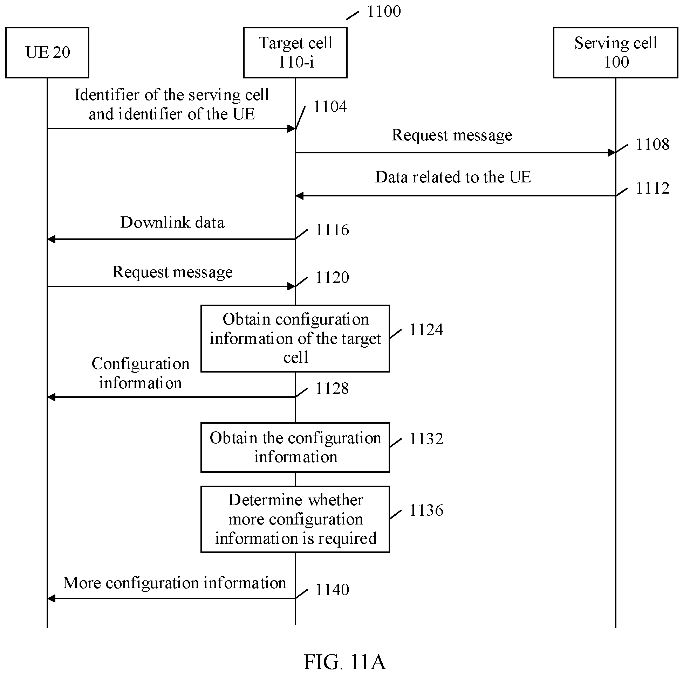

FIG. 11A is a schematic diagram of a downlink data transmission method according to a third example implementation of this application. A method 1100 shown in FIG. 11A includes steps S1104 to S1116.

In step S1104, when or after the UE 20 communicates with the target cell 110-i to notify that the UE 20 is already handed over to the target cell 110-i, the UE 20 sends an identifier of the serving cell 100 and an identifier (for example, a C-RNTI) of the UE 20 in the serving cell 100 to the target cell 110-i.

In step S1108, after receiving the identity of the serving cell 100 and the identity of the UE 20 in the serving cell 100, the target cell 110-i initiates a UE context fetch (UE Context Fetch) procedure, and sends a request message to the serving cell 100 to request data related to the UE 20. For example, the data related to the UE 20 may include, but is not limited to, downlink data that is received by the original serving cell 100 but is not successfully sent to the UE 20, uplink data that is successfully received by the original serving cell 100 from the UE 20 but is not successfully forwarded to the core network CN network element, and/or context information of the UE 20.

In step S1112, after receiving the request message from the target cell 110-i, the serving cell 100 sends the data related to the UE 20 to the target cell 110-i.

In step S1116, after receiving the data related to the UE 20, if the data related to the UE 20 includes downlink data to be sent to the UE 20, the target cell 110-i sends the downlink data to the UE 20.

Through steps S1104 to S1116, when the UE moves away from the original serving cell and is handed over to another cell during data transmission, downlink data that is of the UE and that is accumulated in the original serving cell can be sent to the UE, to ensure that no packet loss occurs. The steps S1104 to S1116 are optional.

Optionally, the method 1100 may further include steps S1120 to S1128, so that the UE 20 can request configuration information of more potential target cells from the current serving cell (that is, the target cell 110-i).

In step S1120, the UE 20 sends a request message to the target cell 110-i to request configuration information of more target cells.

In step S1124, the target cell 110-i negotiates with one or more target cells to which the UE 20 may be handed over, to obtain configuration information corresponding to the one or more target cells. The configuration information includes a resource reserved for the UE 20. Alternatively, the configuration information includes a resource reserved for the UE 20, and effective time information corresponding to the reserved resource and/or uplink synchronization information associated with the target cell.

In step S1128, the target cell 110-i sends the configuration information corresponding to the one or more target cells to the UE 20.

Optionally, the method 1100 may further include steps S1132 to S1140 to configure configuration information of more potential target cells to the UE 20.

In step S1132, the target cell 110-i obtains configuration information corresponding to the target cells 110-1, 110-2, ..., and 110-N originally delivered to the UE 20. For example, the target cell 110-i may obtain the configuration information that is originally delivered to the UE 20 and that is corresponding to the target cells 110-1, 110-2, ..., and 110-N through uploading by the UE 20, requesting from the UE 20, or requesting from the original serving cell 100.

In step S1136, after obtaining the configuration information corresponding to the target cells 110-1, 110-2, ..., and 110-N, the target cell 110-i determines whether it is necessary to deliver the configuration information of more target cells to the UE 20.

In step S1140, if a determining result of step S736 is positive, the target cell 110-i obtains configuration information corresponding to more target cells and delivers the configuration information to the UE 20.

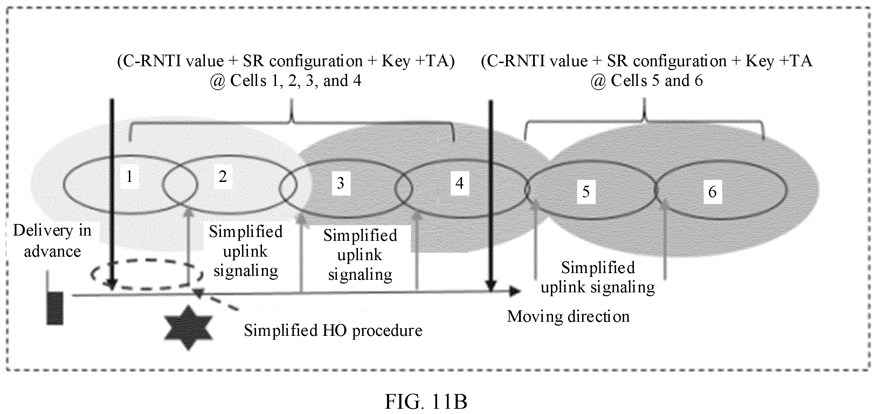

For example, in FIG. 11B, a cell 1 delivers configuration information of target cells 2, 3, and 4 to UE in advance. When the UE is handed over and accesses the target cell 4 or is about to leave the target cell 4, the target cell 4 obtains the configuration information of the target cells 2, 3, and 4 delivered in advance by the cell 1 to the UE through uploading by the UE, requesting from the UE, or requesting from the cell 1. If it is determined that the UE may further move to target cells 5 and 6 subsequently, but the UE does not have configuration information of the target cells 5 and 6, the target cell 4 may further negotiate resources with the target cells 5 and 6 and deliver the resources to the UE in advance through the target cell 4. In this way, when the UE subsequently moves and is handed over to the cells 5 and 6, only simplified uplink signaling (simplified UL signaling) needs to be sent if there is no data or signaling to be uploaded immediately after the handover, and configuration information of a target cell does not need to be frequently obtained.

In the foregoing example implementations, UE in a connected state is used as an example to describe a cell handover solution that is autonomously controlled by the UE. However, this application is not limited thereto. In some other embodiments of this application, the cell handover solution that is autonomously controlled by the UE described above is also applicable to UE in an idle state and UE in an inactive state.

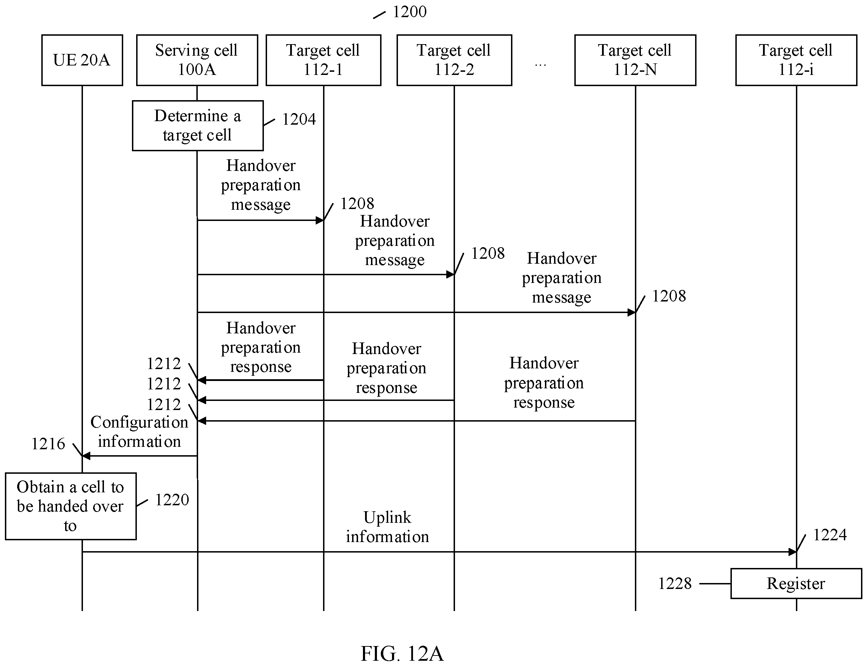

FIG. 12A is a schematic diagram of a cell handover method according to a fourth example implementation of this application. A method 1200 shown in FIG. 12A includes steps S1204 to S1228.

In step S1204, a serving cell 100A determines target cells 112-1, 112-2, ..., and 112-N of UE 20A in a connected state. N is a positive integer. The target cells 112-1, 112-2, ..., and 112-N are cells to which the UE 20A may be handed over, and a number of the target cells may be one or more. For example, but not limited to, the serving cell 100A may obtain the target cells 112-1, 112-2, ..., and 112-N by prediction based on a movement track of the UE 20A and the like.

In step S1208, the serving cell 100A sends a handover preparation (HO preparation) message to the target cells 112-1, 112-2, ..., and 112-N, separately. The handover preparation message requests the target cells to reserve resources for the UE 20A.

In step S1212, the target cells 112-1, 112-2, ..., and 112-N separately send a handover preparation response (HO preparation response) including configuration information to the serving cell 100A. The configuration information sent by the target cells 112-1, 112-2, ..., and 112-N may be the same or different.

The configuration information may include a resource reserved for the UE 20A, and effective time information corresponding to the reserved resource and/or uplink synchronization information associated with the target cell.

For example, the reserved resource may include, but is not limited to, at least one of the following: a C-RNTI, an SR, a RACH resource (for example, a public or dedicated preamble), SRB or DRB configuration, grant (grant) or CG or GF configuration, a key, compression algorithm configuration, and a PHY layer and/or a MAC layer and /or an RLC layer and/or a PDCP layer and/or SDAP configuration.

The effective time information may be, for example, an effective start time of the reserved resource, or an effective time period of the reserved resource, where the time period is defined by an effective start time and an effective end time, or an effective end time of the reserved resource (In this case, for example, but not limited to, the effective start time of the resource starts, by default, from when resource reservation is successful or delivery of a handover command (HO CMD) or a conditional handover command (CHO CMD) to the UE is successful). The configuration information may include one or more sets of resources reserved for the UE 20A. Each set of resources may correspond to same or different effective time information.

The uplink synchronization information may be, for example, a TA, or a mapping relationship between different values of a measurement parameter and a TA. The measurement parameter may include, for example, but is not limited to, one or more of the following: time information, signal quality of downlink signals of a serving cell and/or one or more neighboring cells of the serving cell, a geographical location of UE, and a distance between UE and a cell. The time information may refer to, for example, a specific time (accurate to second), or the like. The signal quality of the downlink signals may be, for example, but is not limited to, an RSRP value, an RSRQ value, an SINR value, a CQI value, and/or a CSI value. The signal quality of the downlink signal may be, for example, but is not limited to, of a single cell, of a single beam (beam), and/or of a plurality of cells and/or beams. The signal quality of the downlink signals may be, for example, but is not limited to, obtained based on one or more of the following measurements: an SSB, a CSI-RS, a DMRS, and the like.

Optionally, if the request message sent by the serving cell 100A to the target cells 112-1, 112-2, ..., and 112-N further includes effective time information of a recommended resource, the target cells 112-1, 112-2, ..., and 112-N may set the effective time information of the resource reserved for the UE 20A with reference to the effective time information of the recommended resource.

Optionally, if the request message sent by the serving cell 100A to the target cells 112-1, 112-2..., and 112-N further includes recommended uplink synchronization information and/or recommended auxiliary information used to determine uplink synchronization information, the target cells 112-1, 112-2, ..., and 112-N may set the uplink synchronization information associated with the target cell with reference to the recommended uplink synchronization information and/or the auxiliary information. The auxiliary information used to determine uplink synchronization information may include, for example, but is not limited to, one or more of the following: information about a location, a speed, a moving direction, and/or a height of the UE 20A; downlink RSRPs of the serving cell 100A and/or neighboring cells of the serving cell 100A; a TA from the UE 20A to the serving cell 100, and the like.

In step S1216, the serving cell 100A delivers the configuration information received from the target cells 112-1, 112-2, ..., and 112-N to the UE 20A by using the base station of the serving cell 100A. For example, but not limited to, the serving cell 100A may deliver the configuration information to the UE 20A in advance by using a handover command (HO CMD) or a conditional handover command (CHO CMD) before the UE 20A performs a cell handover.

Optionally, the serving cell 100A may further deliver identification information of the target cells 112-1, 112-2, ..., and 112-N to the UE 20A. The identification information may include, for example, but is not limited to, frequencies, cell lists, and/or beam lists of the target cells 112-1, 112-2, ..., and 112-N.

In step S1220, the UE 20A obtains a target cell to which the UE 20A is to be handed over. For a conventional handover procedure, the serving cell 100A determines a target cell to which the UE 20A is to be handed over, and delivers an identifier of the determined target cell to the UE 20A, so that the UE 20A obtains the target cell to which the UE 20A is to be handed over. For a CHO procedure, the UE 20A measures signal quality of the serving cell 100A and neighboring cells of the serving cell 100A, or only signal quality of the neighboring cells of the serving cell 100A, based on the conditional handover configuration previously delivered by the serving cell 100A. If signal quality of a certain neighboring cell meets a measurement event specified in the conditional handover configuration, the UE 20A determines the certain neighboring cell as the target cell to which the UE 20A is to be handed over. That the serving cell 100A determines the target cell to which the UE 20A is to be handed over in a conventional handover procedure and that the UE 20A determines the target cell to which the UE 20A is to be handed over in a CHO procedure are described in the conventional technology, for example, but not limited to, a cell handover procedure described in 3GPP TS38.300 V16.3.0 section 9.2.3.2 and a CHO procedure described in 3GPP TS 38.300 V16.3.0. Therefore, details are not described herein again. For ease of description, the target cell to which the UE 20A is to be handed over is referred to as a target cell 112-i below.

In step S1224, after camping and being handed over to the target cell 112-i, the UE 20A sends uplink information to a base station of the target cell 112-i to notify that the UE 20A is already handed over to the target cell 112-i.

If the UE 20A has uplink data and/or signaling to be uploaded immediately after the UE 20A is handed over to the target cell 1 12-i, the uplink information may be uplink data and/or signaling to be uploaded by the UE 20A.

If the UE 20A does not have uplink data and/or signaling to be uploaded immediately after the UE 20A is handed over to target cell 112-i, the uplink information is common uplink signaling to inform that the UE 20A is handed over to target cell 112-i. The common uplink signaling may include, for example, but is not limited to, RRC connection reconfiguration complete (RRC Connection Reconfiguration Complete) signaling.

The UE 20A sends the uplink information to the target cell 112-i in the following scenarios.

In a first case, the target cell 112-i is one of the target cells 112-1, 112-2, ..., and 112-N, and the configuration information that is corresponding to the target cell 112-i and that is delivered by the serving cell 100A to the UE 20A in advance includes a resource reserved for the UE 20 and effective time information corresponding to the reserved resource, but does not include uplink synchronization information associated with the target cell 112-i. For the first case, the UE 20A first determines, based on the effective time information corresponding to the reserved resource, whether the reserved resource is currently effective. If the reserved resource is currently effective, the UE 20A uses the reserved resource to send the uplink information to the target cell 112-i through a non-contention-based random access procedure (for example, the non-contention-based random access procedure shown in FIG. 10C or FIG. 10D). If the reserved resource is not currently effective, the UE 20A sends the uplink information to the target cell 112-i through a contention-based random access procedure (for example, the contention-based random access procedure shown in FIG. 10A or FIG. 10B).

In a second case, the target cell 112-i is one of the target cells 112-1, 112-2, ..., and 112-N, and the configuration information that is corresponding to the target cell 112-i and that is delivered by the serving cell 100A to the UE 20A in advance includes a resource reserved for the UE 20A and uplink synchronization information associated with the target cell 112-i, but does not include effective time information corresponding to the reserved resource (In this case, the resource reserved for the UE 20A is effective by default). For the second case, the UE 20A uses the reserved resource to send the uplink information to the target cell 112-i based on the uplink synchronization information.

If the uplink synchronization information is a TA, the UE 20A uses the reserved resource to send the uplink information to the target cell 112-i based on the TA.

If the uplink synchronization information is a mapping relationship between different values of a measurement parameter and a TA, the UE 20A first obtains an actual value of the measurement parameter, then retrieves a TA corresponding to the actual value from the mapping relationship, and finally uses the reserved resource to send the uplink information to the target cell 112-i based on the retrieved TA.

In a third case, the target cell 112-i is one of the target cells 112-1, 112-2, ..., and 112-N, and the configuration information that is corresponding to the target cell 112-i and that is delivered by the serving cell 100A to the UE 20A in advance includes a resource reserved for the UE 20A and effective time information corresponding to the reserved resource, but does not include uplink synchronization information associated with the target cell 112-i. For the third case, the UE 20A first determines, based on the effective time information corresponding to the reserved resource, whether the reserved resource is currently effective. If the reserved resource is not currently effective, the UE 20A sends the uplink information to the target cell 112-i through a contention-based random access procedure (for example, the contention-based random access procedure shown in FIG. 10A or FIG. 10B). If the reserved resource is currently effective, the UE 20A uses the reserved resource to send the uplink information to the target cell 112-i based on the uplink synchronization information. If the uplink synchronization information is a TA, the UE 20A uses the reserved resource to send the uplink information to the target cell 112-i based on the TA. If the uplink synchronization information is a mapping relationship between different values of a measurement parameter and a TA, the UE 20A first obtains an actual value of the measurement parameter, then retrieves a TA corresponding to the actual value from the mapping relationship, and finally uses the reserved resource to send the uplink information to the target cell 112-i based on the retrieved TA.

In a fourth case, the target cell 110-i is not one of the target cells 112-1, 112-2, ..., and 112-N. In this case, the UE 20A sends the uplink information to the target cell 112-i through a contention-based random access procedure (for example, the contention-based random access procedure shown in FIG. 10A or FIG. 10B).

In step S1228, after receiving the uplink information sent by the UE 20A, the target cell 112-i registers the UE 20 as UE that is handed over to the target cell 112-i.

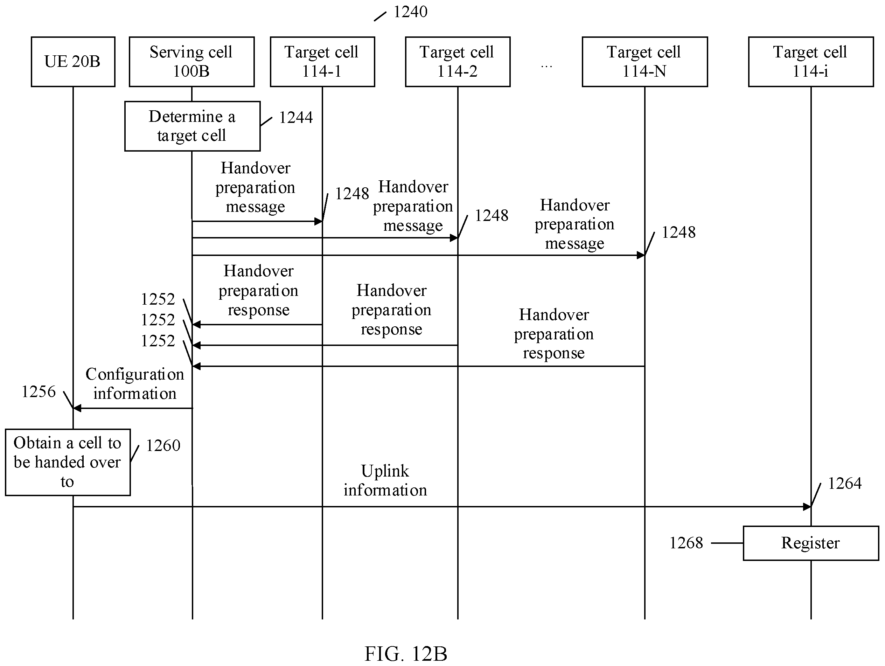

FIG. 12B is a schematic diagram of a cell handover method according to a fifth example implementation of this application. A method 1240 shown in FIG. 12B may include steps S1244 to S1268.

In step S1244, a serving cell 100B determines target cells 114-1, 114-2, ..., and 114-N of UE 20B in a connected state. N is a positive integer. The target cells 114-1, 114-2, ..., and 114-N are cells to which the UE 20B may be handed over, and a number of the target cells may be one or more. For example, but not limited to, the serving cell 100B may obtain the target cells 114-1, 114-2, ..., and 114-N by prediction based on a movement track of the UE 20B and the like.

In step S1248, the serving cell 100B sends a handover preparation (HO preparation) message to the target cells 114-1, 114-2, ..., and 114-N, separately. The handover preparation message requests the target cells to reserve resources for the UE 20B.

In step S1252, the target cells 114-1, 114-2, ..., and 114-N separately send a handover preparation response (HO preparation response) including configuration information to the serving cell 100B. The configuration information sent by the target cells 114-1, 114-2, ..., and 114-N may be the same or different.

The configuration information may only include the resources reserved for the UE 20B. The reserved resource may include, for example, but is not limited to, at least one of the following: a C-RNTI, an SR, a RACH resource (for example, a public or dedicated preamble), SRB or DRB configuration, grant (grant) or CG or GF configuration, a key, compression algorithm configuration, and a PHY layer and/or a MAC layer and /or an RLC layer and/or a PDCP layer and/or SDAP configuration.

Alternatively, the configuration information may include a resource reserved for the UE 20B, and effective time information corresponding to the reserved resource and/or uplink synchronization information associated with the target cell.

The effective time information may be, for example, an effective start time of the reserved resource, or an effective time period of the reserved resource, where the time period is defined by an effective start time and an effective end time, or an effective end time of the reserved resource (In this case, for example, but not limited to, the effective start time of the resource starts, by default, from when resource reservation is successful or delivery of a handover command (HO CMD) or a conditional handover command (CHO CMD) to the UE is successful). The configuration information may include one or more sets of resources reserved for the UE 20B. Each set of resources may correspond to same or different effective time information.

The uplink synchronization information may be, for example, a TA, or a mapping relationship between different values of a measurement parameter and a TA. The measurement parameter may include, for example, but is not limited to, one or more of the following: time information, signal quality of downlink signals of a serving cell and/or one or more neighboring cells of the serving cell, a geographical location of UE, and a distance between UE and a cell. The time information may refer to, for example, a specific time (accurate to second), or the like. The signal quality of the downlink signals may be, for example, but is not limited to, an RSRP value, an RSRQ value, an SINR value, a CQI value, and/or a CSI value. The signal quality of the downlink signal may be, for example, but is not limited to, of a single cell, of a single beam (beam), and/or of a plurality of cells and/or beams. The signal quality of the downlink signals may be, for example, but is not limited to, obtained based on one or more of the following measurements: an SSB, a CSI-RS, a DMRS, and the like.

Optionally, if the request message sent by the serving cell 100B to the target cells 114-1, 114-2, ..., and 114-N further includes effective time information of a recommended resource, the target cells 114-1, 114-2, ..., and 114-N may set the effective time information of the resource reserved for the UE 20B with reference to the effective time information of the recommended resource.

Optionally, if the request message sent by the serving cell 100B to the target cells 114-1, 114-2..., and 114-N further includes recommended uplink synchronization information and/or recommended auxiliary information used to determine uplink synchronization information, the target cells 114-1, 114-2, ..., and 114-N may set the uplink synchronization information associated with the target cell with reference to the recommended uplink synchronization information and/or the auxiliary information. The auxiliary information used to determine uplink synchronization information may include, for example, but is not limited to, one or more of the following: information about a location, a speed, a moving direction, and/or a height of the UE 20B; downlink RSRPs of the serving cell 100B and/or neighboring cells of the serving cell 100B; a TA from the UE 20B to the serving cell 100B, and the like.

In step S1256, the serving cell 100B delivers the configuration information received from the target cells 11B-1, 11B-2, ..., and 11B-N to the UE 20B by using the base station of the serving cell 100B. For example, but not limited to, the serving cell 100B may deliver the configuration information to the UE 20B in advance by using a handover command (HO CMD) or a conditional handover command (CHO CMD) before the UE 20B performs a cell handover.

Optionally, the serving cell 100B may further deliver identification information of the target cells 114-1, 114-2, ..., and 114-N to the UE 20B. The identification information may include, for example, but is not limited to, frequencies, cell lists, and/or beam lists of the target cells 114-1, 114-2, ..., and 114-N.

In step S1260, the UE 20B obtains a target cell to which the UE 20B is to be handed over. For a conventional handover procedure, the serving cell 100B determines a target cell to which the UE 20B is to be handed over, and delivers an identifier of the determined target cell to the UE 20B, so that the UE 20B obtains the target cell to which the UE 20B is to be handed over. For a CHO procedure, the UE 20B measures signal quality of the serving cell 100B and neighboring cells of the serving cell 100B, or only signal quality of the neighboring cells of the serving cell 100B, based on the conditional handover configuration previously delivered by the serving cell 100B. If signal quality of a certain neighboring cell meets a measurement event specified in the conditional handover configuration, the UE 20B determines the certain neighboring cell as the target cell to which the UE 20B is to be handed over. That the serving cell 100B determines the target cell to which the UE 20B is to be handed over in a conventional handover procedure and that the UE 20B determines the target cell to which the UE 20B is to be handed over in a CHO procedure are described in the conventional technology, for example, but not limited to, a cell handover procedure described in 3GPP TS38.300 V16.3.0 section 9.2.3.2 and a CHO procedure described in 3GPP TS 38.300 V16.3.0. Therefore, details are not described herein again. For ease of description, the target cell to which the UE 20B is to be handed over is referred to as a target cell 114-i below.

In step S1264, after camping and being handed over to the target cell 114-i, the UE 20B sends uplink information to a base station of the target cell 114-i to notify that the UE 20B is already handed over to the target cell 114-i.

If the UE 20B has uplink data and/or signaling to be uploaded immediately after the UE 20B is handed over to the target cell 1 14-i, the uplink information may be uplink data and/or signaling to be uploaded by the UE 20B.

If the UE 20B has no uplink data and/or signaling to be uploaded immediately after the UE 20B is handed over to the target cell 114-i, the uplink information may be simplified uplink signaling (Simplified UL Signaling).

The simplified uplink signaling may be, for example, but is not limited to, one of the following: a dedicated preamble, a dedicated SRS, a dedicated SR, UCI sent by a CG or a GF, n MAC CE sent by the CG or the GF, an RRC message sent by the CG or GF, a common random access channel message including a UE identifier (for example, a C-RNTI), a common SRS including a UE identifier, a common SR including a UE identifier, and a resource message (Grant) including a UE identifier.

The UE 20B sends the uplink information to the target cell 114-i in the following scenarios.

In a first case, the target cell 114-i is one of the target cells 114-1, 114-2, ..., and 114-N, and the configuration information that is corresponding to the target cell 114-i and that is delivered by the serving cell 100B to the UE 20B in advance includes a resource reserved for the UE 20B, but does not include effective time information corresponding to the reserved resource and uplink synchronization information associated with the target cell 114-i. For the first case, the UE 20B uses the reserved resource to send the uplink information to the target cell 114-i through a non-contention-based random access procedure (for example, the non-contention-based random access procedure shown in FIG. 10C or FIG. 10D).

In a second case, the target cell 114-i is one of the target cells 114-1, 114-2, ..., and 114-N, and the configuration information that is corresponding to the target cell 114-i and that is delivered by the serving cell 100B to the UE 20B in advance includes a resource reserved for the UE 20B and effective time information corresponding to the reserved resource, but does not include uplink synchronization information associated with the target cell 114-i. For the second case, the UE 20B first determines, based on the effective time information corresponding to the reserved resource, whether the reserved resource is currently effective. If the reserved resource is currently effective, the UE 20B uses the reserved resource to send the uplink information to the target cell 114-i through a non-contention-based random access procedure (for example, the non-contention-based random access procedure shown in FIG. 10C or FIG. 10D). If the reserved resource is not currently effective, the UE 20B sends the uplink information to the target cell 114-i through a contention-based random access procedure (for example, the contention-based random access procedure shown in FIG. 10A or FIG. 10B).

In a third case, the target cell 114-i is one of the target cells 114-1, 114-2, ..., and 114-N, and the configuration information that is corresponding to the target cell 114-i and that is delivered by the serving cell 100B to the UE 20B in advance includes a resource reserved for the UE 20B and uplink synchronization information associated with the target cell 114-i, but does not include effective time information corresponding to the reserved resource (In this case, the resource reserved for the UE 20B is effective by default). For the third case, the UE 20B uses the reserved resource to send the uplink information to the target cell 114-i based on the uplink synchronization information.

If the uplink synchronization information is a TA, the UE 20B uses the reserved resource to send the uplink information to the target cell 114-i based on the TA.

If the uplink synchronization information is a mapping relationship between different values of a measurement parameter and a TA, the UE 20B first obtains an actual value of the measurement parameter, then retrieves a TA corresponding to the actual value from the mapping relationship, and finally uses the reserved resource to send the uplink information to the target cell 114-i based on the retrieved TA.

In a fourth case, the target cell 114-i is one of the target cells 114-1, 114-2, ..., and 114-N, and the configuration information that is corresponding to the target cell 114-i and that is delivered by the serving cell 100 to the UE 20B in advance includes a resource reserved for the UE 20B, effective time information corresponding to the reserved resource, and uplink synchronization information associated with the target cell 114-i. For the fourth case, the UE 20B first determines, based on the effective time information corresponding to the reserved resource, whether the reserved resource is currently effective. If the reserved resource is not currently effective, the UE 20B sends the uplink information to the target cell 114-i through a contention-based random access procedure (for example, the contention-based random access procedure shown in FIG. 10A or FIG. 10B). If the reserved resource is currently effective, the UE 20B uses the reserved resource to send the uplink information to the target cell 114-i based on the uplink synchronization information. If the uplink synchronization information is a TA, the UE 20B uses the reserved resource to send the uplink information to the target cell 114-i based on the TA. If the uplink synchronization information is a mapping relationship between different values of a measurement parameter and a TA, the UE 20B first obtains an actual value of the measurement parameter, then retrieves a TA corresponding to the actual value from the mapping relationship, and finally uses the reserved resource to send the uplink information to the target cell 114-i based on the retrieved TA.

In a fifth case, the target cell 114-i is not one of the target cells 114-1, 114-2, ..., and 114-N. In this case, the UE 20B sends the uplink information to the target cell 114-i through a contention-based random access procedure (for example, the contention-based random access procedure shown in FIG. 10A or FIG. 10B).

In step S1268, after receiving the uplink information sent by the UE 20B, the target cell 114-i registers the UE 20B as UE that is handed over to the target cell 114-i.

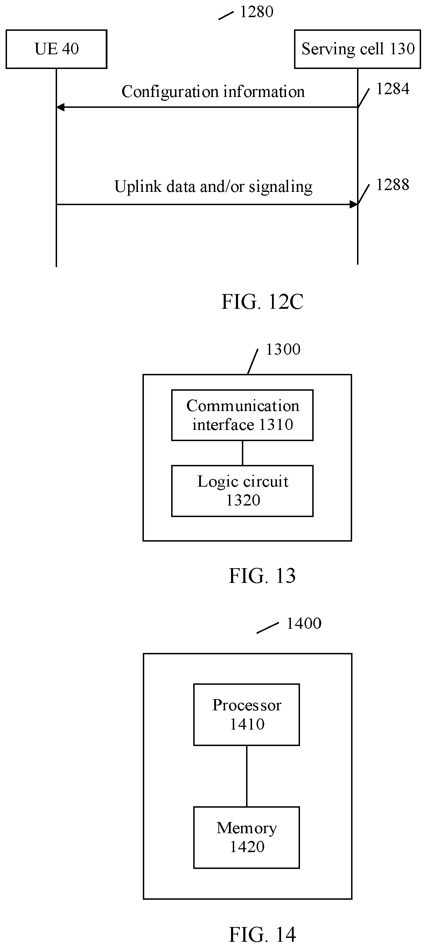

FIG. 12C is a schematic diagram of a communication method in a non-handover scenario according to a sixth example implementation of this application. A communication method 1280 shown in FIG. 12C includes steps S1284 and S1288.

In step S1284, a serving cell 130 determines and delivers configuration information to UE 40 camping on a serving cell 130. The UE 40 may be UE in an idle state, an inactive state, or a connected state. When the UE 40 is UE in an idle state or UE in an inactive state, for example, but not limited to, the serving cell 130 may deliver configuration information to the UE 40 or a UE group to which the UE 40 belongs by using an SIB in system information carried on a broadcast channel. Alternatively, before the UE 40 switches to an idle state or an inactive state, that is, when the UE 40 is in a connected state, the serving cell 130 delivers configuration information to the UE 40 by using RRC or non-access stratum (Non-Access Stratum: NAS) signaling, and then, the UE 40 retains the received configuration information after switching to an idle or an inactive state. When the UE 40 is UE in a connected state, the serving cell 130 may deliver the configuration information to the UE 40 by using, for example, but not limited to, an SIB in system information carried in a broadcast channel, or by using RRC signaling or the like.

The configuration information may include, for example, only a resource reserved by the serving cell 130 for the UE 40 or the UE group to which the UE 40 belongs. Alternatively, the configuration information may include, for example, a resource reserved by the serving cell 130 for the UE 40 or the UE group to which the UE 40 belongs, effective time information corresponding to the reserved resource, and/or uplink synchronization information associated with the serving cell 130.

The reserved resource may include, for example, but is not limited to, at least one of the following: a C-RNTI, an SR, a RACH resource (for example, a public or dedicated preamble), SRB or DRB configuration, grant (grant) or CG or GF configuration, or the like.

The effective time information may be, for example, an effective start time of the reserved resource, or a time period defined by an effective start time and an effective end time of the reserved resource, or an effective end time of the reserved resource (for example, but not limited to, the effective start time starts, by default, from when resource reservation is successful or delivery of configuration information to the UE 40 is successful). The configuration information may include one or more sets of resources reserved for the UE 40. Each set of resources may correspond to same or different effective time information.

The uplink synchronization information may be, for example, a TA, or a mapping relationship between different values of a measurement parameter and a TA. The measurement parameter may include, for example, but is not limited to, one or more of the following: time information, signal quality of downlink signals of a serving cell and/or one or more neighboring cells of the serving cell, a geographical location of UE, and a distance between UE and a cell. The time information may refer to, for example, a specific time (accurate to second), or the like. The signal quality of the downlink signals may be, for example, but is not limited to, an RSRP value, an RSRQ value, an SINR value, a CQI value, and/or a CSI value. The signal quality of the downlink signal may be, for example, but is not limited to, of a single cell, of a single beam (beam), and/or of a plurality of cells and/or beams. The signal quality of the downlink signals may be, for example, but is not limited to, obtained based on one or more of the following measurements: an SSB, a CSI-RS, a DMRS, and the like.

In step S1288, after receiving the configuration information delivered by the serving cell 130, when the UE 40 wants to send uplink data and/or signaling to the serving cell 130, the UE 40 sends the uplink data and/or signaling to the serving cell 130 based on the received configuration information.

The UE 40 sends the uplink data and/or signaling to the serving cell 130 based on the received configuration information in the following scenarios.

In a first case, the configuration information delivered by the serving cell 130 to the UE 40 includes only a resource reserved for the UE 40 or the UE group to which the UE 40 belongs, but does not include effective time information corresponding to the reserved resource and uplink synchronization information associated with the serving cell 130. In this case, the UE 40 uses the reserved resource to send the uplink data and/or signaling to the serving cell 130 through a non-contention-based random access procedure (for example, the non-contention-based random access procedure shown in FIG. 10C or FIG. 10D).

In a second case, the configuration information delivered by the serving cell 130 to the UE 40 includes a resource reserved for the UE 40 or a UE group to which the UE 40 belongs and effective time information corresponding to the reserved resource, but does not include uplink synchronization information associated with the serving cell 130. In this case, the UE 40 first determines, based on the effective time information corresponding to the reserved resource, whether the reserved resource is currently effective. If the reserved resource is currently effective, the UE 40 uses the reserved resource to send the uplink data and/or signaling to the serving cell 130 through a non-contention-based random access procedure (for example, the non-contention-based random access procedure shown in FIG. 10C or FIG. 10D). If the reserved resource is not currently effective, the UE 40 sends the uplink data and/or signaling to the serving cell 130 through a contention-based random access procedure (for example, the contention-based random access procedure shown in FIG. 10A or FIG. 10B).

In a third case, the configuration information delivered by the serving cell 130 to the UE 40 includes a resource reserved for the UE 40 or the UE group to which the UE 40 belongs and uplink synchronization information associated with the serving cell 130, but does not include effective time information corresponding to the reserved resource (In this case, the resource reserved for the UE 40 is effective by default). In this case, the UE 40 uses the reserved resource to send the uplink data and/or signaling to the serving cell 130 based on the uplink synchronization information.

If the uplink synchronization information is a TA, the UE 40 uses the reserved resource to send the uplink data and/or signaling to the serving cell 130 based on the TA.

If the uplink synchronization information is a mapping relationship between different values of a measurement parameter and a TA, the UE 40 first obtains an actual value of the measurement parameter, then retrieves a TA corresponding to the actual value from the mapping relationship, and finally uses the reserved resource to send the uplink data and/or signaling to the serving cell 130 based on the retrieved TA.

In a fourth case, the configuration information delivered by the serving cell 130 to the UE 40 includes a resource reserved for the UE 40 or the UE group to which the UE 40 belongs, effective time information corresponding to the reserved resource, and uplink synchronization information associated with the serving cell 130. In this case, the UE 40 first determines, based on the effective time information corresponding to the reserved resource, whether the reserved resource is currently effective. If the reserved resource is not currently effective, the UE 40 sends the uplink data and/or signaling to the serving cell 130 through a contention-based random access procedure (for example, the contention-based random access procedure shown in FIG. 10A or FIG. 10B). If the reserved resource is currently effective, the UE 40 uses the reserved resource to send the uplink data and/or signaling to the serving cell 130 based on the uplink synchronization information. If the uplink synchronization information is a TA, the UE 40 uses the reserved resource to send the uplink data and/or signaling to the serving cell 130 based on the TA. If the uplink synchronization information is a mapping relationship between different values of a measurement parameter and a TA, the UE 40 first obtains an actual value of the measurement parameter, then retrieves a TA corresponding to the actual value from the mapping relationship, and finally uses the reserved resource to send the uplink data and/or signaling to the serving cell 130 based on the retrieved TA.

In this embodiment, in a non-handover scenario, the serving cell delivers configuration information in advance to the UE camping on the serving cell. Therefore, when the UE sends uplink data and/or signaling to the serving cell, if the resource reserved by the serving cell for the UE is effective and the configuration information includes the uplink synchronization information associated with the serving cell, the UE can directly use the reserved resource to send uplink data and/or signaling to the serving cell based on the uplink synchronization information associated with the serving cell without performing a random access process, to accelerate uplink data and signaling transmission.

FIG. 13 is a schematic diagram of a communication apparatus according to an embodiment of this application. A communication apparatus 1300 shown in FIG. 13 may be, for example, but is not limited to, a chip or the like. The communication apparatus 1300 may include a communication interface 1310 and a logic circuit 1320.

When the communication apparatus 1300 is located in UE, the communication interface 1310 of the communication apparatus 1300 receives at least one piece of configuration information from a serving cell, where the at least one piece of configuration information is provided by at least one target cell. The logic circuit 1320 of the communication apparatus 1300 may, for example, select, as shown in the method 500 of FIG. 5A, a first target cell to be handed over to, where the first target cell is one of the at least one target cell, and the logic circuit 1320 is handed over to the first target cell based on the selection.

When the communication apparatus 1300 is located in a base station of the serving cell, the logic circuit 1320 of the communication apparatus 1300 may, for example, determine, as shown in the method 530 of FIG. 5D, a target cell. For example, the communication interface 1310 of the communication apparatus 1300 may perform the following operations: sending a request message to the target cell, where the request message requests the target cell to reserve a resource for the UE; receiving configuration information from the target cell, where the configuration information includes the reserved resource, effective time information corresponding to the reserved resource, and/or uplink synchronization information associated with the target cell; and sending the configuration information to the UE.

When the communication apparatus 1300 is located in the base station of the target cell, the communication interface 1310 of the communication apparatus 1300 may, for example, receive a request message from the serving cell, where the request message requests the target cell to reserve a resource for the UE, and send configuration information to the serving cell, where the configuration information includes the reserved resource, and effective time information corresponding to the reserved resource and/or uplink synchronization information associated with the target cell. The logic circuit 1320 of the communication apparatus 1300 may, for example, register, as shown in the method 560 of FIG. 5E, the UE as UE handed over to the target cell when receiving the uplink information of the UE.

FIG. 14 is a schematic diagram of a communication device according to an embodiment of this application. A communications device 1400 shown in FIG. 14 may include a processor 1410 and a memory 1420 connected to the processor 1410. The memory 1420 stores program instructions. When the program instructions are executed by the processor 1410, the processor 1410 is enabled to perform the method 500 shown in FIG. 5A, or the method 530 shown in FIG. 5D, or the method 560 shown in FIG. 5E. The processor 1410 may be, but is not limited to, a general-purpose processor, a digital signal processor (Digital Signal Processor: DSP), an application-specific integrated circuit (Application-specific Integrated Circuit: ASIC), a field programmable gate array (Field Programmable Gate Array: FPGA) or another programmable logic device, a discrete gate or a transistor logic device, or a discrete hardware component. The general-purpose processor may be a microprocessor, or the processor may be any conventional processor or the like. The memory 1420 may be, for example, but is not limited to, a portable computer disk, a hard disk, a read-only memory (Read-Only Memory: ROM), a random access memory (Random Access Memory: RAM), an erasable programmable read-only memory (Electrically Erasable Programmable read-only memory: EPROM), an optical fiber, a portable compact disc read-only memory (Compact Disc Read-Only Memory: CD-ROM), an optical storage device, a magnetic storage device, or any suitable combination thereof. The processor and the memory may be separately disposed, or may be integrated together.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electrical, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

An embodiment of this application further provides a computer-readable storage medium. The computer-readable storage medium stores a computer program. When the program is executed by a processor, the processor is enabled to perform a cell handover method. The method includes at least one of the solutions described in the foregoing embodiments. The processor may be but is not limited to a general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

The computer storage medium in this embodiment of this application may be any combination of one or more computer-readable media. The computer-readable medium may be a computer-readable signal medium or a computer-readable storage medium. For example, the computer-readable storage medium may be, but is not limited to, an electric, magnetic, optical, electromagnetic, infrared, or semiconductor system, apparatus, or device, or any combination thereof. More specific examples (non-exhaustive list) of the computer-readable storage medium include an electrical connection having one or more conducting wires, a portable computer disk, a hard disk, a RAM, a ROM, an EPROM, an optical fiber, a CD-ROM, an optical storage device, a magnetic storage device, or any appropriate combination thereof. In this specification, the computer-readable storage medium may be any tangible medium that includes or stores a program, and the program may be used by or in combination with an instruction execution system, apparatus, or device.

The computer-readable signal medium may include a data signal propagated in a baseband or propagated as part of a carrier, where the data signal carries computer-readable program code. The propagated data signal may be in a plurality of forms, including but not limited to an electromagnetic signal, an optical signal, or any appropriate combination thereof. The computer-readable signal medium may alternatively be any computer-readable medium other than the computer-readable storage medium. The computer-readable medium may send, propagate, or transmit a program used by or in combination with an instruction execution system, apparatus, or device.

The program code contained on the computer-readable medium may be transmitted by using any suitable medium, including but not limited to wireless, wire, optical cable, radio frequency (Radio Frequency: RF), or any suitable combination thereof.

Computer program code for performing the operations in this application may be written in one or more programming languages, or a combination thereof. The programming languages include but are not limited to an object-oriented programming language, such as Java, Smalltalk, and C++, and also include a conventional procedural programming language, such as a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. In a case in which a remote computer is used, the remote computer may be connected to a user computer through any type of network, including a local area network (Local Area Network: LAN) or a wide area network (Wide Area Network: WAN), or may be connected to an external computer (for example, through the internet provided by an internet service provider).

It should be noted that the foregoing are merely some embodiments of this application and applied technical principles. A person skilled in the art may understand that the present invention is not limited to specific embodiments described herein, and a person skilled in the art may make various obvious changes, readjustments, and replacements without departing from the protection scope of the present invention. Therefore, although this application is described in detail with reference to the foregoing embodiments, the present invention is not limited to the foregoing embodiments. More other equivalent embodiments may be included without departing from the concept of the present invention, and all fall within the protection scope of the present invention.

## Claims

1. A cell handover method, comprising:
receiving, by a terminal, at least one piece of configuration information from a serving cell, wherein the at least one piece of configuration information is provided by at least one target cell;
selecting, by the terminal, a first target cell to which the terminal is to be handed over, wherein the first target cell is one of the at least one target cell;
handing over the terminal to the first target cell based on the selection; and
performing, by the terminal, communication based on configuration information corresponding to the first target cell.

2. The method according to claim 1, wherein the selecting, by the terminal, a first target cell to which the terminal is to be handed over comprises:
receiving, by the terminal, a cell reselection parameter delivered by the serving cell; and
performing, by the terminal, a cell reselection process based on the received cell reselection parameter to select the first target cell as a cell to which the terminal is to be handed over.

3. The method according to claim 1, wherein the selecting, by the terminal, a first target cell to which the terminal is to be handed over comprises:
measuring, by the terminal, signal quality of at least one neighboring cell of the serving cell;
determining, by the terminal, signal quality of at least a first neighboring cell, so that a specified measurement event is satisfied and the first neighboring cell is one of the at least one target cell; and
selecting, by the terminal, the first neighboring cell as the first target cell.

4. The method according to any one of claims 1 to 3, wherein
the performing, by the terminal, communication based on configuration information corresponding to the first target cell comprises: sending, by the terminal, uplink data or signaling.

5. The method according to claim 4, wherein
the configuration information comprises uplink synchronization information associated with the at least one target cell.

6. The method according to claim 4, wherein
the configuration information comprises a reserved resource and effective time information corresponding to the resource.

7. The method according to claim 5, wherein
the uplink synchronization information comprises a timing advance.

8. The method according to claim 5, wherein
the uplink synchronization information comprises a mapping relationship between different values of a measurement parameter and a timing advance, and
the sending, by the terminal, uplink data or signaling comprises:
obtaining, by the terminal, an actual value of the measurement parameter;
determining, by the terminal, a timing advance of the first target cell based on the actual value of the measurement parameter and the mapping relationship associated with the first target cell; and
sending, by the terminal, the uplink data or signaling based on the determined timing advance.

9. The method according to claim 8, wherein
the measurement parameter comprises at least one of the following: time information, signal quality of downlink signals of the first target cell and/or one or more neighboring cells of the first target cell, a geographical location of the terminal, and a distance between the terminal and the first target cell.

10. The method according to any one of claims 4 to 9, wherein the method further comprises:
when or after sending the uplink data or signaling, sending, by the terminal, at least one of the following to the first target cell:
an identifier of the serving cell and an identifier of the terminal in the serving cell;
information about the at least one target cell; and
a message for requesting configuration information of more target cells of the terminal.

11. The method according to any one of claims 1 to 10, wherein
when the at least one target cell is a plurality of target cells, the at least one target cell comprises at least two target cells for serial handover.

12. A cell handover method, comprising:
determining a target cell;
sending a request message to the target cell, wherein the request message requests the target cell to reserve a resource for a terminal;
receiving configuration information from the target cell, wherein the configuration information comprises the reserved resource, and effective time information corresponding to the reserved resource and/or uplink synchronization information associated with the target cell; and
sending the configuration information to the terminal.

13. The method according to claim 12, wherein
the request message comprises effective time information of a recommended resource, and/or recommended uplink synchronization information, and/or auxiliary information used to determine uplink synchronization information.

14. The method according to claim 12 or 13, wherein the uplink synchronization information comprises a timing advance or a mapping relationship between different values of a measurement parameter and a timing advance.

15. The method according to claim 14, wherein
the measurement parameter comprises time information, signal quality of a downlink signal of a cell, a geographical location of the terminal, or a distance between the terminal and the cell.

16. A cell handover method, comprising:
receiving a request message from a serving cell, wherein the request message requests a target cell to reserve a resource for a terminal; and
sending configuration information to the serving cell, wherein the configuration information comprises the reserved resource, and effective time information corresponding to the reserved resource and/or uplink synchronization information associated with the target cell.

17. The method according to claim 16, wherein
the request message comprises effective time information of a recommended resource, and/or recommended uplink synchronization information, and/or auxiliary information used to determine uplink synchronization information; and
the effective time information corresponding to the reserved resource and/or the uplink synchronization information associated with the target cell are/is set based on the effective time information of the recommended resource and/or the recommended uplink synchronization information and/or the auxiliary information used to determine the uplink synchronization information.

18. The method according to claim 16 or 17, further comprising:
receiving uplink information of the terminal; and
registering the terminal as a terminal handed over to the target cell.

19. A cell handover apparatus, comprising:
a receiving unit, configured to receive at least one piece of configuration information from a serving cell, wherein the at least one piece of configuration information is provided by at least one target cell;
a selection unit, configured to select a first target cell to be handed over to, wherein the first target cell is one of the at least one target cell;
a handover unit, configured to hand over to the first target cell based on the selection; and
a communication unit, configured to perform communication based on configuration information corresponding to the first target cell.

20. The apparatus according to claim 19, wherein
the receiving unit is further configured to receive a cell reselection parameter delivered by the serving cell; and
the selection unit is further configured to perform a cell reselection process based on the received cell reselection parameter to select the first target cell as a cell to which the terminal is to be handed over.

21. The apparatus according to claim 19, wherein the apparatus further comprises:
a measurement unit, configured to measure signal quality of at least one neighboring cell of the serving cell, wherein
the selection unit is further configured to: determine signal quality of at least a first neighboring cell, so that a specified measurement event is satisfied and the first neighboring cell is one of the at least one target cell, and select the first neighboring cell as the first target cell.

22. The apparatus according to any one of claims 19 to 21, wherein
the communication unit is further configured to send uplink data or signaling.

23. The apparatus according to claim 22, wherein
the configuration information comprises uplink synchronization information associated with the at least one target cell.

24. The apparatus according to claim 22, wherein
the configuration information comprises a reserved resource and effective time information corresponding to the resource.

25. The apparatus according to claim 23, wherein
the uplink synchronization information comprises a timing advance.

26. The apparatus according to claim 23, wherein
the uplink synchronization information comprises a mapping relationship between different values of a measurement parameter and a timing advance, and
the apparatus further comprises:
an obtaining unit, configured to obtain an actual value of the measurement parameter; and
a determining unit, configured to determine a timing advance of the first target cell based on the actual value of the measurement parameter and the mapping relationship associated with the first target cell, wherein
the communication unit is further configured to send the uplink data or signaling based on the determined timing advance.

27. The apparatus according to claim 26, wherein
the measurement parameter comprises at least one of the following: time information, signal quality of downlink signals of the first target cell and/or one or more neighboring cells of the first target cell, a geographical location of the terminal, and a distance between the terminal and the first target cell.

28. The apparatus according to any one of claims 22 to 27, wherein
the communication unit is further configured to: when or after sending the uplink data or signaling, send at least one of the following to the first target cell:
an identifier of the serving cell and an identifier of the terminal in the serving cell;
information about the at least one target cell; and
a message for requesting configuration information of more target cells of the terminal.

29. The apparatus according to any one of claims 19 to 28, wherein
when the at least one target cell is a plurality of target cells, the at least one target cell comprises at least two target cells for serial handover.

30. A cell handover apparatus, comprising:
a determining unit, configured to determine a target cell;
a first sending unit, configured to send a request message to the target cell, wherein the request message requests the target cell to reserve a resource for a terminal;
a receiving unit, configured to receive configuration information from the target cell, wherein the configuration information comprises the reserved resource, and effective time information corresponding to the reserved resource and/or uplink synchronization information associated with the target cell; and
a second sending unit, configured to send the configuration information to the terminal.

31. The apparatus according to claim 30, wherein
the request message comprises effective time information of a recommended resource, and/or recommended uplink synchronization information, and/or auxiliary information used to determine uplink synchronization information.

32. The apparatus according to claim 30 or 31, wherein the uplink synchronization information comprises a timing advance or a mapping relationship between different values of a measurement parameter and a timing advance.

33. The apparatus according to claim 32, wherein
the measurement parameter comprises time information, signal quality of a downlink signal of a cell, a geographical location of the terminal, or a distance between the terminal and the cell.

34. A cell handover apparatus, comprising:
a receiving unit, configured to receive a request message from a serving cell, wherein the request message requests a target cell to reserve a resource for a terminal; and
a sending unit, configured to send configuration information to the serving cell, wherein the configuration information comprises the reserved resource, and effective time information corresponding to the reserved resource and/or uplink synchronization information associated with the target cell.

35. The apparatus according to claim 34, wherein
the request message comprises effective time information of a recommended resource, and/or recommended uplink synchronization information, and/or auxiliary information used to determine uplink synchronization information; and
the effective time information corresponding to the reserved resource and/or the uplink synchronization information associated with the target cell are/is set based on the effective time information of the recommended resource and/or the recommended uplink synchronization information and/or the auxiliary information used to determine the uplink synchronization information.

36. The apparatus according to claim 34 or 35, wherein
the receiving unit is further configured to receive uplink information of the terminal; and
the apparatus further comprises a registration unit, configured to register the terminal as a terminal handed over to the target cell.

37. A communication system, comprising:
the apparatus according to any one of claims 30 to 33; and
the apparatus according to any one of claims 34 to 36.

38. A communication apparatus, comprising:
a communication interface; and
a logic circuit, configured to perform the method according to any one of claims 1 to 11 or the method according to any one of claims 12 to 18.

39. A computer-readable storage medium, wherein the computer-readable storage medium stores program instructions, and when the program instructions are executed by a processor, the processor is enabled to perform the method according to any one of claims 1 to 18.

40. A communication device, comprising:
a processor; and
a memory, connected to the processor, wherein the memory stores program instructions, and when the program instructions are executed by the processor, the processor is enabled to perform the method according to any one of claims 1 to 11 or the method according to any one of claims 12 to 18.
